(19) Europäisches Patentamt
European Patent Office
Office européen des brevets

(11) **EP 2 891 961 A2**

(12) **EUROPEAN PATENT APPLICATION**

(43) Date of publication:
**08.07.2015 Bulletin 2015/28**

(51) Int Cl.:
***G06F 3/041*** (2006.01)    ***G06F 3/0488*** (2013.01)

(21) Application number: **15150002.2**

(22) Date of filing: **02.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.01.2014 JP 2014000516
10.11.2014 JP 2014228097**

(71) Applicant: **Funai Electric Co., Ltd.
Daito-shi,
Osaka 574-0013 (JP)**

(72) Inventor: **Masaki, Yasuo
Daito-shi, Osaka 574-0013 (JP)**

(74) Representative: **Grünecker Patent- und
Rechtsanwälte
PartG mbB
Leopoldstraße 4
80802 München (DE)**

(54) **Input apparatus**

(57)    An input apparatus (100, 101, 102, 103, 104) includes a touch panel (2) and a control portion (1, 5, 6, 7, 8) acquiring at least one of a touch area and the shape of a touched portion and determining whether or not to allow a plurality of touch operations performed simultaneously on the basis of at least one of the touch area which has been acquired, the amount of change of the touch area, and the shape of the touched portion which has been acquired.

*FIG.8*

FIRST EMBODIMENT

EP 2 891 961 A2

**Description**

BACKGROUND OF THE INVENTION

Field of the Invention

The present invention relates to an input apparatus, and more particularly, it relates to an input apparatus including a touch panel.

Description of the Background Art

An input apparatus including a touch panel is known in general, as disclosed in Japanese Patent Laying-Open No. 11-272422 (1999), for example.

The aforementioned Japanese Patent Laying-Open No. 11-272422 discloses a computer input apparatus including a tablet (touch panel) detecting the contact position and contact area of a contacted finger or pen. This computer input apparatus is configured to perform control of displaying a character or an image by digital ink having a width proportional to the area of the finger or pen in contact with the tablet.

Although the computer input apparatus described in the aforementioned Japanese Patent Laying-Open No. 11-272422 can perform control of displaying a character or an image by digital ink having a width proportional to the area of the finger or pen in contact with the tablet, the computer input apparatus cannot conceivably perform control according to an input operation specific to a fingertip and an input operation performed by an input device such as the pen. In other words, the computer input apparatus cannot conceivably accept an input operation suitable for input means (the finger, the pen, or the like) employed by a user.

SUMMARY OF THE INVENTION

The present invention has been proposed in order to solve the aforementioned problem, and an object of the present invention is to provide an input apparatus capable of accepting an input operation suitable for input means employed by a user.

An input apparatus according to an aspect of the present invention includes a touch panel and a control portion acquiring input information input by a user with the touch panel, and the control portion is configured to acquire at least one of a touch area and the shape of a touched portion from the input information and determine whether or not to allow a plurality of touch operations performed simultaneously on the basis of at least one of the touch area which has been acquired, the amount of change of the touch area, and the shape of the touched portion which has been acquired.

The input apparatus according to the aspect of the present invention is configured as described above, whereby when determining to allow the plurality of touch operations performed simultaneously, the control portion accepts an input based on a multi-touch operation, which is touch operations simultaneously performed by a plurality of fingertips, for example, and hence the control portion can accept a gesture operation (a pinch-in operation, a pinch-out operation, or the like) of enlarging or reducing an entire display image by two fingers specific to a fingertip operation in addition to a pointing operation for selecting an object on a screen. When determining not to allow the plurality of touch operations performed simultaneously, the control portion does not accept a touch operation even if a plurality of input devices (a user's hand holding an input device or the like) simultaneously touch the touch panel, for example. Consequently, the control portion can accept an input operation suitable for input means employed by the user.

In the aforementioned input apparatus according to the aspect, the control portion is preferably configured to validate a first touch operation of a plurality of successive touch operations when determining not to allow the plurality of touch operations performed simultaneously and invalidate second and subsequent touch operations in a state where the first touch operation is validated. According to this structure, when not accepting the plurality of touch operations performed simultaneously, the control portion does not accept the touch operation even if an object (the user's hand holding the input device, for example) other than the input device touches the touch panel after the input device touches the touch panel, for example, and hence the control portion can be inhibited from erroneously accepting an input operation not intended by the user.

In the aforementioned input apparatus according to the aspect, the control portion is preferably configured to determine whether a touch operation has been performed by a fingertip operation or an input device operation other than the fingertip operation on the basis of at least one of the touch area which has been acquired, the amount of change of the touch area, and the shape of the touched portion. According to this structure, when determining that the touch operation has been performed by the fingertip operation, the control portion can accept the multi-touch operation, the gesture operation, etc., which are touch operations specific to the fingertip operation. When determining that the touch operation has been performed by the input device operation other than the fingertip operation, the control portion does not accept the touch operation even if the plurality of input devices (the user's hand holding the input device or the like) simultaneously touch the touch panel. Consequently, the control portion can accept the input operation more suitable for the input means employed by the user.

In the aforementioned input apparatus according to the aspect, the control portion is preferably configured to determine to allow the plurality of touch operations performed simultaneously when the touch area is at least a first area threshold and determine not to allow the plurality of touch operations performed simultaneously when the touch area is less than the first area threshold. When the plurality of touch operations performed simultaneously are performed, i.e. in the case of the fingertip operation, for example, the touch area is often relatively large. When the plurality of touch operations performed simultaneously are not performed, i.e. in the case of the input device operation, on the other hand, the touch area is often relatively small. According to the present invention, the control portion compares the touch area with the first area threshold while focusing on this point, so that the control portion can easily determine whether or not to allow the plurality of touch operations performed simultaneously.

In this case, the control portion is preferably configured to determine that a touch operation is a fingertip operation when the touch area is at least the first area threshold and determine that the touch operation is an input device operation when the touch area is less than the first area threshold. According to this structure, the control portion can easily determine whether the touch operation has been performed by the fingertip operation or the input device operation by comparing the touch area with the first area threshold.

In the aforementioned input apparatus according to the aspect, the input information preferably includes positional information about a touch operation, and the control portion is preferably configured to acquire the amount of change of the touch area when the position of the touch operation has moved while the touch operation has continued and determine not to allow the plurality of touch operations performed simultaneously when the amount of change which has been acquired is less than a first change amount threshold. According to this structure, when the plurality of touch operations are performed simultaneously (the fingertip operation, for example), the amount of change of the touch area is relatively large. When the plurality of touch operations are not performed simultaneously (the input device operation, for example), on the other hand, the amount of change of the touch area is relatively small. On this point, according to the present invention, the control portion can easily determine whether or not to allow the plurality of touch operations performed simultaneously by comparing the touch area with the first change amount threshold.

In the aforementioned input apparatus according to the aspect, the input information preferably includes positional information about a touch operation, and the control portion is preferably configured to acquire the amount of change of the touch area when the position of the touch operation has moved while the touch operation has continued and determine whether or not to allow the plurality of touch operations performed simultaneously on the basis of the touch area again when the control portion determines to allow the plurality of touch operations performed simultaneously and the amount of change is less than a second change amount threshold or when the control portion determines not to allow the plurality of touch operations performed simultaneously and the amount of change is at least a third change amount threshold. According to this structure, the control portion determines whether or not to allow the plurality of touch operations performed simultaneously on the basis of the amount of change of the touch area again even when the control portion has determined whether or not to allow the plurality of touch operations performed simultaneously, and hence the control portion can accept the input operation more reliably suitable for the input means employed by the user.

In the aforementioned input apparatus according to the aspect, the control portion is preferably configured to maintain a determination result of whether or not to allow the plurality of touch operations performed simultaneously until a prescribed time elapses after a touch operation. According to this structure, the control portion can continuously perform control, employing the same determination result even when a user's fingertip or the input device is temporarily separated from the touch panel, and hence the control portion can be further inhibited from accepting the input operation not intended by the user. After the user performs the touch operation with the input device, for example, the control portion does not determine that it is the input operation even when the input device is temporarily separated from the touch panel and the user's hand touches the touch panel by the time when the user performs a next input with the input device, and hence the control portion can continuously accept the touch operation performed by the input means intended by the user.

In this case, the control portion is preferably configured to clear the determination result of whether or not to allow the plurality of touch operations performed simultaneously after the prescribed time elapses. According to this structure, the control portion suppresses the input operation not intended by the user within the prescribed time and clears the determination result after the lapse of the prescribed time, whereby the control portion can properly accept the input operation corresponding to the input means employed by the user even when the user changes the input means.

In the aforementioned input apparatus according to the aspect, the control portion is preferably configured to determine that a touch operation is an operation performed by an atypical input device different from a typical input device when the touch area is less than a first area threshold and at least a second area threshold. According to this structure, the control portion can easily determine whether the touch operation is based on an input operation performed by the typical input device or an input operation performed by the atypical input device by comparing the touch area with the first area threshold and the second area threshold when determining not to allow the plurality of touch operations performed simultaneously. In this description, the typical input device denotes an input device designed to perform an input operation such as the pointing operation, a drawing operation, or the gesture operation, and the atypical input device denotes an input device designed to perform an input operation such as an operation of erasing a drawing, for example.

In the aforementioned input apparatus according to the aspect, the control portion is preferably configured to calculate the degree of circularity as the shape of the touched portion from the input information and determine that a touch operation is a touch operation performed by a brush pen when the degree of circularity is less than a circularity degree threshold. According to this structure, generally, the degree of circularity of the brush pen is relatively small, and hence the control portion can easily determine whether the touch operation is based on an input operation performed by the brush pen or is based on an input operation performed by another input means by comparing the degree of circularity of a touch-operated portion with the circularity degree threshold.

In this case, the brush pen preferably includes a pen tip having a brush body portion and a brush tip portion, and the control portion is preferably configured to determine the brush body portion and the brush tip portion on the basis of information about at least one of the center of gravity of the touched portion and the moving direction of the touch operation when determining that the touch operation is the touch operation performed by the brush pen. According to this structure, the control portion can easily determine the brush body portion and the brush tip portion, and hence the control portion can accurately accept the touch operation according to the shape of the input device (brush pen).

In the aforementioned input apparatus according to the aspect, the control portion is preferably configured to perform control of further increasing the time resolution of detection of a touch operation than that in the case where the control portion determines to allow the plurality of touch operations performed simultaneously, in the case where the control portion determines not to allow the plurality of touch operations performed simultaneously. According to this structure, generally, the speed of touch (the speed of writing) in the case where the control portion determines not to allow the plurality of touch operations performed simultaneously (in the case where the user performs the touch operation with the input device other than his/her fingertip, for example) is faster than the speed of touch in the case where the control portion determines to allow the plurality of touch operations performed simultaneously (in the case where of the fingertip operation, for example), and hence the control portion can accurately accept the touch operation even when the user quickly performs the touch operation with the input device. In the case where the touch operation is performed by the fingertip operation or the like, the time resolution is reduced, and hence the processing load on the control portion can be reduced.

In this case, the control portion is preferably configured to be capable of running drawing application software and non-drawing application software and preferably perform control of further increasing the time resolution of the detection of the touch operation than that in the case where the control portion determines to allow the plurality of touch operations performed simultaneously or in the case where the non-drawing application software is run, in the case where the control portion determines not to allow the plurality of touch operations performed simultaneously and the drawing application software is run. Generally, the speed of touch (the speed of writing) of the user employing the input device in the case where the drawing application software is run is faster than the speed of touch of the user employing the fingertip or the input device in the case where the non-drawing application software is run. On this point, according to the present invention, the time resolution is increased in the case where the control portion determines not to allow the plurality of touch operations performed simultaneously and the drawing application software is run, whereby the control portion can accurately accept the touch operation even when the user quickly performs the touch operation with the input device. In the case where the non-drawing application is run, the time resolution is reduced, and hence the processing load on the control portion can be reduced. The drawing application software indicates of a wide concept including software for drawing an illustration on the basis of the information input by the touch operation performed by the user, software for recognizing drawn characters and acquiring character information or the like (writing application software) on the basis of the information input by the touch operation performed by the user, etc.

In the aforementioned input apparatus according to the aspect, the control portion is preferably configured to acquire radius information by circularly approximating the shape of the touched portion or acquire a long radius, a short radius, and information about the orientation of a long axis by elliptically approximating the shape of the touched portion, on the basis of the input information. According to this structure, the control portion can easily acquire the information about the shape of the touched portion by acquiring the radius information or the long radius, the short radius, and the information about the orientation of the long axis.

According to the present invention, as hereinabove described, the input apparatus capable of accepting the input operation suitable for the input means (a finger, a pen, or the like) employed by the user can be provided.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram showing the overall structure of an input apparatus according to a first embodiment of the present invention;

Fig. 2 is a diagram for illustrating a touch area (fingertip) according to the first embodiment of the present invention;

Fig. 3 is a diagram for illustrating a touch area (pen) according to the first embodiment of the present invention;

Fig. 4 is a diagram for illustrating the amount of change of the touch area (fingertip) according to the first embodiment of the present invention;

Fig. 5 is a diagram for illustrating the amount of change of the touch area (pen) according to the first embodiment of the present invention;

Fig. 6 is a diagram for illustrating a multi-touch operation according to the first embodiment of the present invention;

Fig. 7 is a diagram for illustrating an input device operation (pen) according to the first embodiment of the present invention;

Fig. 8 is a diagram for illustrating a prescribed time according to the first embodiment of the present invention;

Fig. 9 is a diagram for illustrating a time resolution of acceptance of a touch operation according to the first embodiment of the present invention;

Fig. 10 is a flowchart for illustrating an input device determination processing flow in the input apparatus according to the first embodiment of the present invention;

Fig. 11 is a flowchart for illustrating a fingertip input mode processing flow in the input apparatus according to the first embodiment of the present invention;

Fig. 12 is a flowchart for illustrating a pen input mode processing flow in the input apparatus according to the first embodiment of the present invention;

Fig. 13 is a diagram for illustrating an input device operation (eraser) according to a second embodiment of the present invention;

Fig. 14 is a flowchart for illustrating an input device determination processing flow in an input apparatus according to the second embodiment of the present invention;

Fig. 15 is a flowchart for illustrating an eraser input mode processing flow in the input apparatus according to the second embodiment of the present invention;

Fig. 16 is a diagram for illustrating the degree of circularity of a touch-operated portion according to a third embodiment of the present invention;

Fig. 17 is a diagram for illustrating an input device operation (brush pen) according to the third embodiment of the present invention;

Fig. 18 is a flowchart for illustrating an input device determination processing flow in an input apparatus according to the third embodiment of the present invention;

Fig. 19 is a flowchart for illustrating a brush pen input mode processing flow in the input apparatus according to the third embodiment of the present invention;

Fig. 20 is a flowchart for illustrating an input device determination processing flow in an input apparatus according to a fourth embodiment of the present invention; and

Fig. 21 is a flowchart for illustrating an input device determination processing flow in an input apparatus according to a fifth embodiment of the present invention.

DESCRIPTION OF THE PREFERRED EMBODIMENTS

Embodiments of the present invention are hereinafter described with reference to the drawings.

(First Embodiment)

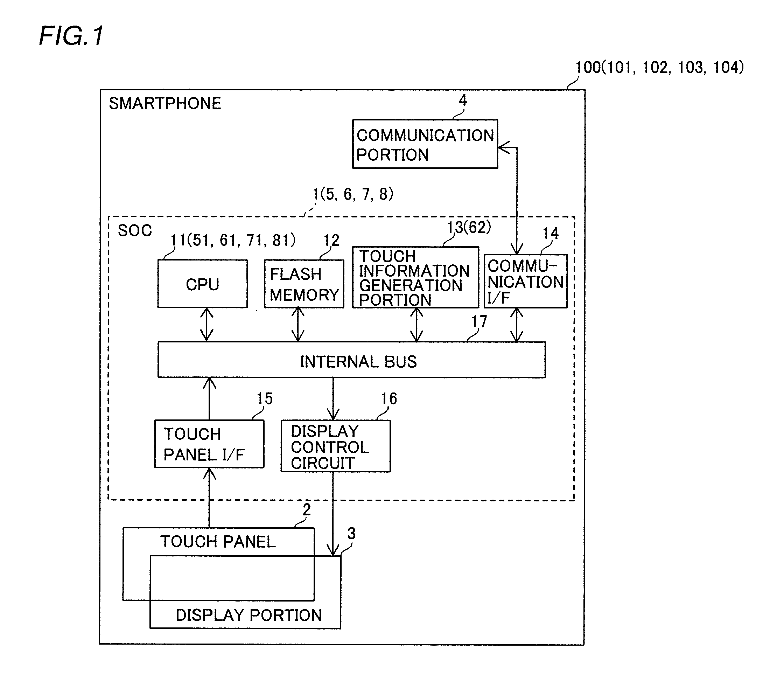

The structure of a smartphone 100 according to a first embodiment of the present invention is now described with reference to Figs. 1 to 9.

The smartphone 100 according to the first embodiment of the present invention includes an SOC (System on a Chip) 1, a touch panel 2, a display portion 3, and a communication portion 4, as shown in Fig. 1. The smartphone 100 is an example of the "input apparatus" in the present invention. The SOC 1 is an example of the "control portion" in the present invention.

As shown in Fig. 1, the display portion 3 is constituted by a liquid crystal panel etc. and is configured to display an image output from the SOC 1. The communication portion 4 is configured to be capable of communicating with another telephone equipment through a telephone line (not shown).

The SOC 1 includes a CPU 11, a flash memory 12, a touch information generation portion 13, a communication I/F (interface) 14, a touch panel I/F 15, a display control circuit 16, and an internal bus 17. The components in the SOC 1 are configured to be capable of being coupled to each other by the internal bus 17. The touch panel I/F 15 is configured to connect the touch panel 2 to the SOC 1. The communication I/F 14 is configured to connect the communication portion 4 to the SOC 1. The display control circuit 16 is configured as a circuit for displaying an image on the display portion 3. For example, the display control circuit 16 displays an image on the display portion 3 by controlling the orientation of liquid crystal molecules of the liquid crystal panel of the display portion 3 on the basis of an image signal output from the CPU 11. The flash memory 12 previously stores (installs) software configuring an operating system, drawing application software (hereinafter referred to as the "drawing app") performing drawing on the display portion 3 on the basis of an input operation accepted by the touch panel 2, video content reproduction application software (hereinafter referred to as the "video app") having a program reproducing video content stored in the flash memory 12 separately, etc. The drawing app is an example of the "drawing application software" in the present invention. The video app is an example of the "non-drawing application software" in the present invention.

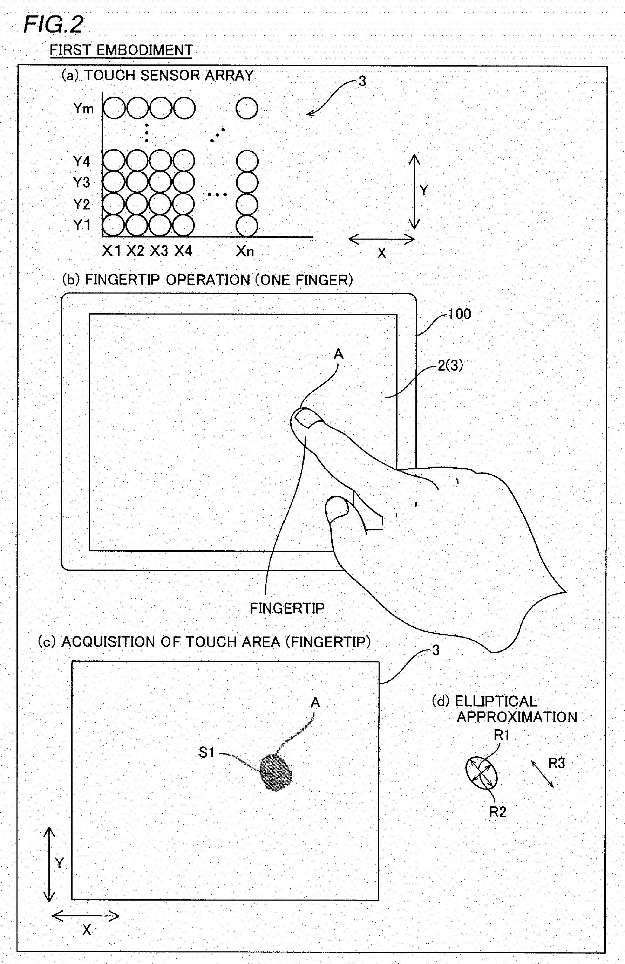

As shown in Fig. 2, the touch panel 2 includes a transparent projection capacitance touch panel in which touch sensors (view (a) of Fig. 2) are arranged in a two-dimensional array (in X-Y axis directions in Fig. 2) and are formed integrally with the display portion 3. The touch panel 2 is configured to be capable of accepting a touch operation corresponding to the position of an image or the like displayed on the display portion 3, and the touch information generation portion 13 is configured to acquire input information of the touch panel 2 detected by a touch sensor array of the touch panel as two-dimensional input information (coordinate information). For example, the touch information generation portion 13 is configured to acquire coordinate information, which is nth in an X-axis direction and mth in a Y-axis direction, when a touch sensor, which is nth in the X-axis direction and mth in the Y-axis direction, detects the touch operation, as shown in view (a) of Fig. 2. The touch information generation portion 13 is configured to calculate a touch area S on the basis of the acquired input information of the touch panel 2 and generate information about the shape of a touched portion. The CPU 11 is configured to acquire the touch area S calculated by the touch information generation portion 13 and the information about the shape of the touch-operated portion. As shown in view (b) of Fig. 2 and view (c) of Fig. 2, for example, the touch information generation portion 13 is configured to bidimensionally (by X-Y axis direction coordinates) acquire the input information of the touch panel 2 corresponding to a position (a reference character A in view (b) of Fig. 2) of the touch panel touched by a user's fingertip and calculate the touch area S (a reference character S1 in view (c) of Fig. 2).

As shown in Fig. 2, the CPU 11 is configured to acquire radius information by circularly approximating the shape of the touch-operated portion or acquire a long radius (a reference character R1 in view (d) of Fig. 2), a short radius (a reference character R2 in view (d) of Fig. 2), and information about the orientation (arrow R3) of a long axis by elliptically approximating the shape of the touch-operated portion, on the basis of the acquired input information of the touch panel 2. Furthermore, the CPU 11 is configured to output a drawing based on the acquired information about the shape of the touch-operated portion when running the drawing app or the like. The CPU 11 is configured to acquire the radius information by circularly approximating the shape of the touch-operated portion on the basis of the acquired input information of the touch panel 2 and draw a perfect circle of the acquired radius information when outputting the drawing, for example.

According to the first embodiment, the CPU 11 is configured to determine that the touch operation is a fingertip operation when the touch area S is at least a first area threshold T1, as shown in Fig. 2. The CPU 11 is configured to acquire the touch area S1, which is an area of the touch panel touched by the user's fingertip, and compare the touch area S1 with the first area threshold T1, as shown in view (c) of Fig. 2, for example. The CPU 11 is configured to determine that the touch operation (the reference character A in view (c) of Fig. 2) is the fingertip operation (allow a plurality of touch operations performed simultaneously) when the touch area S1 is at least the first area threshold T1 and execute a fingertip input mode described later.

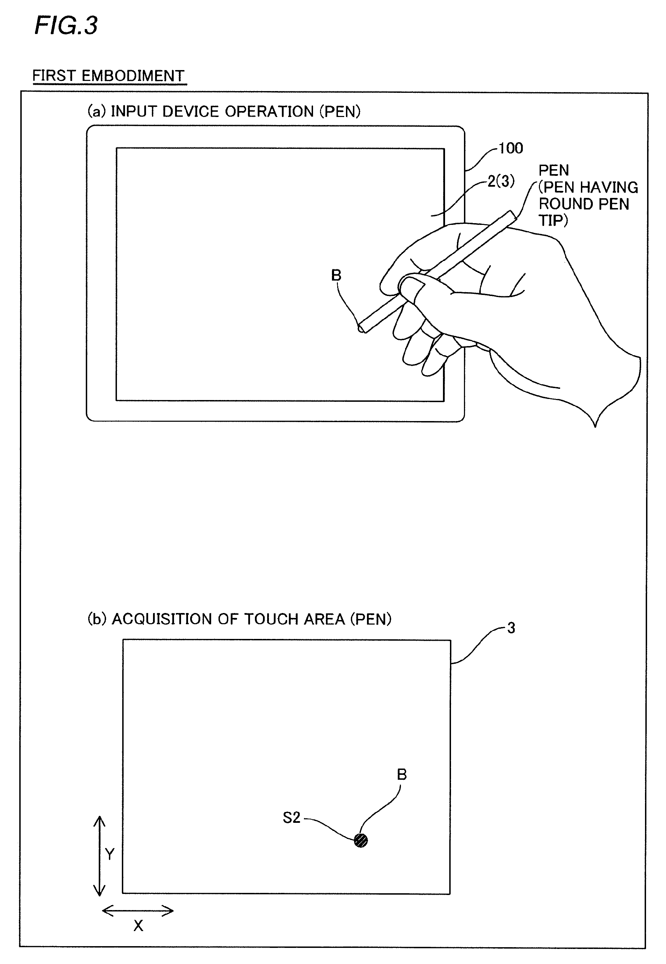

According to the first embodiment, the CPU 11 is configured to determine that the touch operation is an input device operation when the touch area S is less than the first area threshold T1, as shown in Fig. 3. The CPU 11 is configured to acquire a touch area S2, which is an area of the touch panel touched by an input device, and compare the touch area S2 with the first area threshold T1, as shown in view (a) and view (b) of Fig. 3, for example. The CPU 11 is configured to determine that the touch operation (a reference character B in view (b) of Fig. 3) has been performed by the input device (pen) (not allow the plurality of touch operations performed simultaneously) when the touch area S2 is less than the first area threshold T1 and execute a pen input mode described later. The pen is an example of the "typical input device" in the present invention.

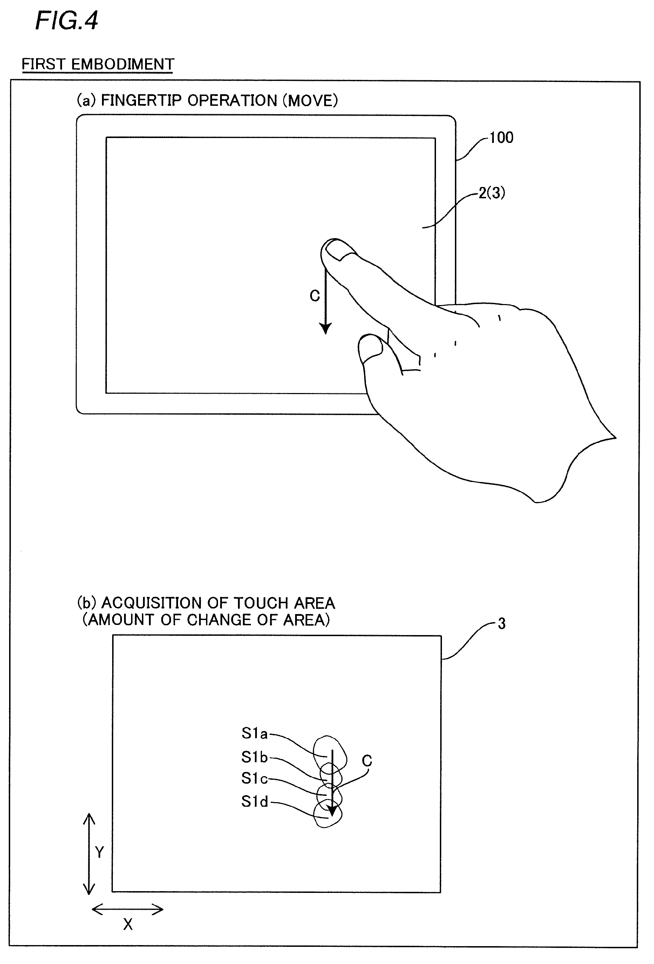

According to the first embodiment, the CPU 11 is configured to acquire the amount of change of the touch area S when the touch operation continues to be performed after accepting the touch operation, as shown in Fig. 4. The CPU 11 is configured to determine whether the touch operation is the fingertip operation or the input device (pen input) operation on the basis of the acquired amount of change of the touch area S and the touch area S. Specifically, the CPU 11 is configured to acquire touch areas S1a to S1d, as shown in view (b) of Fig. 4 when the touch panel 2 accepts a touch operation performed by continuously moving the user's finger along arrow C, as shown in view (a) of Fig. 4. Furthermore, the CPU 11 is configured to calculate differences between the acquired touch areas S1a to S1d. In addition, the CPU 11 is configured to compare the calculated differences with a second change amount threshold T2. The CPU 11 is configured to reset the fingertip input mode when a difference between the touch areas S1a and S1b is less than the second change amount threshold T2 during execution of the fingertip input mode, for example. The CPU 11 is configured to determine the fingertip operation or the input device operation (determine whether or not to allow the plurality of touch operations performed simultaneously) on the basis of the touch area S of the touch-operated portion after resetting the fingertip input mode.

The CPU 11 is configured to output a drawing based on the acquired amount of change of the touch area S when running the drawing app or the like. The CPU 11 is configured to reduce the density of a color of a drawn image when the acquired touch area S is reduced with time and to increase the density of the color of the drawn image when the acquired touch area S is increased with time, for example.

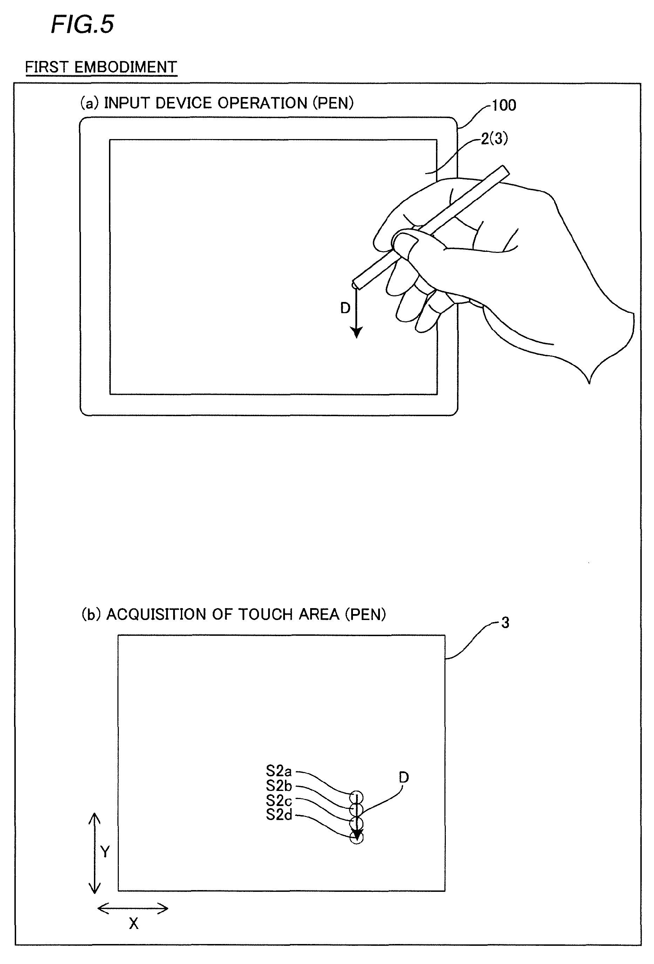

As shown in Fig. 5, the CPU 11 is configured to acquire the amount of change of the touch area S when the touch operation continues to be performed after accepting the touch operation performed by the input device (pen). The CPU 11 is configured to acquire touch areas S2a to S2d when the touch operation (arrow D in Fig. 5) is continuously performed during execution of the pen input mode, for example. The CPU 11 is configured to reset the pen input mode when a difference between the touch areas S2a and S2b (the amount of change of the touch area S) is at least a third change amount threshold T3. The CPU 11 is configured to determine the fingertip operation or the input device operation (determine whether or not to allow the plurality of touch operations performed simultaneously) on the basis of the touch area S of the touch-operated portion after resetting the pen input mode.

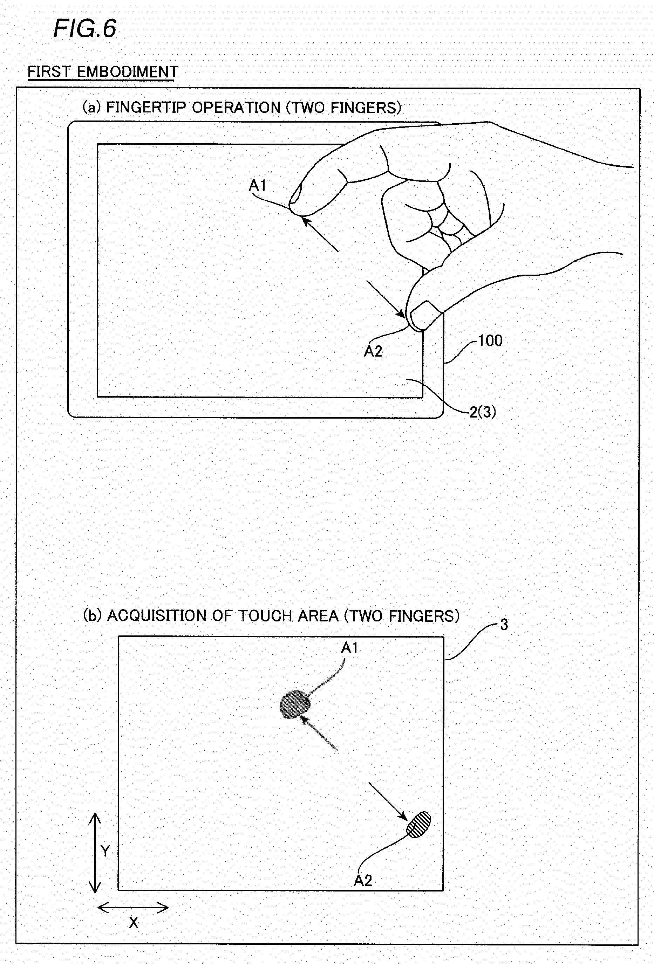

According to the first embodiment, the CPU 11 is configured to accept a multi-touch operation, which is a touch operation in which a plurality of fingertip operations are to be accepted simultaneously, and a gesture operation of enlarging or reducing the entire image displayed on the display portion 3 performed by two fingers when executing the fingertip input mode, as shown in Fig. 6. The CPU 11 is configured to acquire input information about two touch operations, as shown in view (b) of Fig. 6 when two of a user's forefinger (a reference character A1 in view (a) of Fig. 6) and a user's thumb (a reference character A2 in view (a) of Fig. 6) touch the touch panel 2, as shown in view (a) of Fig. 6, for example. The CPU 11 is configured to perform control of determining whether the positions of the acquired two touch operations come close to each other or move apart from each other, as shown in view (b) of Fig. 6 when the user's thumb and the user's forefinger are moved such that an interval between the user's thumb and the user's forefinger is increased (arrows in Fig. 6), reduce the image on the display portion 3 when the positions of the two touch operations come close to each other, and enlarge the image on the display portion 3 when the positions of the two touch operations move apart from each other.

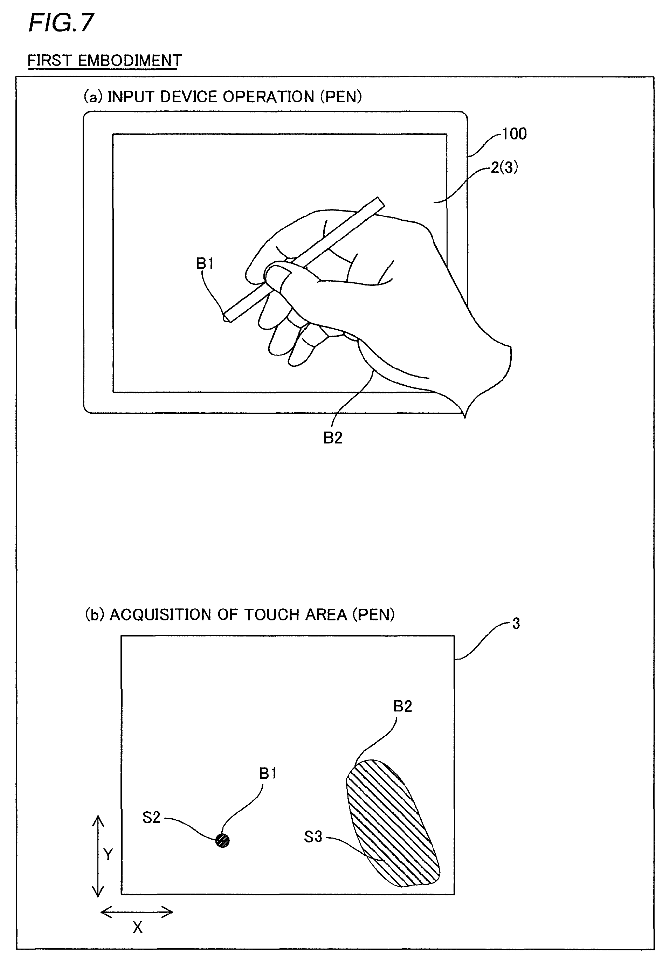

On the other hand, the CPU 11 is configured to perform control of not accepting touch operations simultaneously performed by a plurality of input devices when executing the pen input mode, as shown in Fig. 7. Specifically, the CPU 11 is configured to perform control of not accepting an input operation based on information about a touch operation (a reference character B2 and an area S3 in Fig. 7) based on contact of a user's hand with the touch panel 2 when the user's hand touches the touch panel 2 (the reference character B2 and the area S3 in Fig. 7) while performing a touch operation (a reference character B1 in Fig. 7) with the input device (pen), as shown in view (b) of Fig. 7.

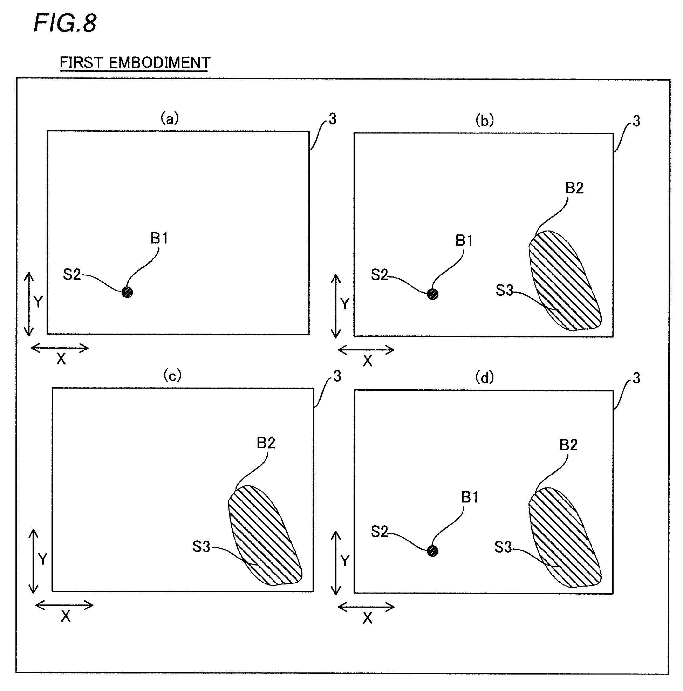

The CPU 11 is configured to validate a first touch operation of a plurality of successive touch operations and invalidate second and subsequent touch operations in a state where the first touch operation is validated when determining that the touch operations are input device (pen input) operations, as shown in Fig. 8. Specifically, the CPU 11 is configured to perform control of not accepting (invalidating) input operations based on the second and subsequent touch operations (the reference character B2 in view (b) of Fig. 8) in the case where the second and subsequent touch operations (the reference character B2 in view (b) of Fig. 8) are performed in the state where the touch operation (the reference character B1 in view (b) of Fig. 8) performed by the pen is validated, as shown in view (b) of Fig. 8, when the touch panel 2 detects the touch operation (the reference character B1 in view (a) of Fig. 8) performed by the pen and the CPU 11 executes the pen input mode, as shown in view (a) of Fig. 8. In other words, the CPU 11 is configured not to accept the multi-touch operation when executing the pen input mode.

According to the first embodiment, the CPU 11 is configured to perform control of maintaining a determination result until a prescribed time elapses even in the case where the user's fingertip or the input device is separated from the touch panel after determining whether the touch operation has been performed by the fingertip operation or the input device operation on the basis of the touch area S, as shown in Fig. 8.

Specifically, the CPU is configured to perform control of not accepting (invalidating) the input operations based on the second and subsequent operations (the reference character B2 in view (b) of Fig. 8), as described above, when the second and subsequent touch operations (the reference character B2 in view (b) of Fig. 8) are performed in the state where the touch operation (the reference character B1 in view (b) of Fig. 8) performed by the pen is validated, as shown in view (b) of Fig. 8 after the touch panel 2 detects the touch operation (the reference character B1 in view (a) of Fig. 8) performed by the pen and the CPU 11 starts to execute the pen input mode, as shown in view (a) of Fig. 8. The CPU 11 is configured to continue to execute the pen input mode until the prescribed time elapses when the pen performing the touch operation (the reference character B1 in Fig. 8) is separated, as shown in view (c) of Fig. 8, in a state where the second and subsequent touch operations (the reference character B2 in view (b) of Fig. 8) are performed, and is configured not to perform the input operations based on the determined touch operations (the reference character B2 in view (b) of Fig. 8) not performed by the pen. In other words, the CPU 11 is configured to maintain the determination result until the prescribed time elapses. The CPU 11 is configured to measure the lapse of time anew from when the touch operation is accepted again in the case where the determined touch operation based on pen input is accepted again by the time when the prescribed time elapses, as shown in view (d) of Fig. 8. The prescribed time can be changed by a setting operation performed by a user and is set to about 2 seconds, for example.

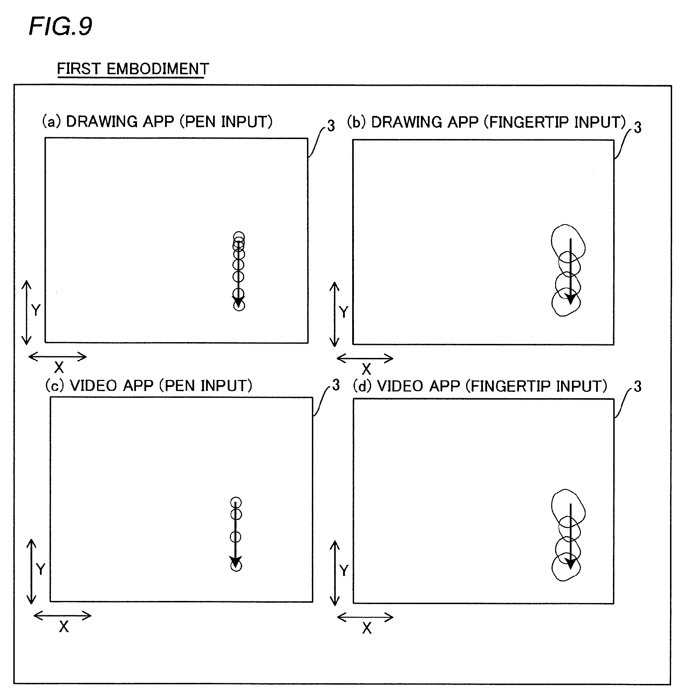

According to the first embodiment, the CPU 11 is configured to be capable of running the drawing app and the video app, and the CPU 11 is configured to perform control of further increasing the time resolution of the touch operation detected by the touch panel 2 than that in the case where the video app is run or the CPU 11 determines that the touch operation has been performed by the fingertip operation, in the case where the CPU 11 determines that the touch operation has been performed by the input device (pen input) and the drawing app is run, as shown in Fig. 9.

Specifically, the CPU 11 is configured to further increase the time resolution of the touch operation detected by the touch panel 2 (shorten a detection cycle) than that in the case where the touch operation performed by the fingertip operation has been accepted, as shown in view (b) of Fig. 9, in the case where the touch operation performed by the input device (pen input) operation has been accepted in the state where the CPU 11 runs the drawing app, as shown in view (a) of Fig. 9. The CPU 11 is configured to equalize the time resolutions of the touch operations detected by the touch panel 2 in the case where the touch operation (view (c) of Fig. 9) based on the input device (pen input) operation has been accepted and in the case where the touch operation (view (d) of Fig. 9) based on the fingertip operation has been accepted, as shown in view (c) and view (d) of Fig. 9, when the video app is run.

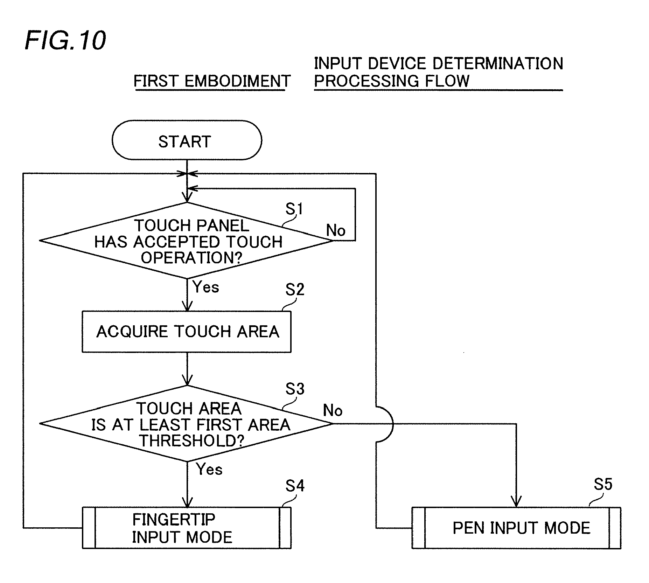

An input device determination processing flow in the smartphone 100 according to the first embodiment is now described with reference to Fig. 10. The CPU 11 performs processing in the smartphone 100.

First, in the smartphone 100, the CPU 11 determines whether or not the touch panel 2 has accepted the touch operation at a step S1, as shown in Fig. 10. The CPU 11 repeats this determination until the touch panel 2 has accepted the touch operation and advances to a step S2 when determining that the touch panel 2 has accepted the touch operation. At the step S2, the CPU 11 acquires the touch area S. Thereafter, the CPU 11 advances to a step S3.

According to the first embodiment, the CPU 11 determines whether or not the touch area S is at least the first area threshold T1 at the step S3. When determining that the touch area S is at least the first area threshold T1, the CPU 11 advances to a step S4, and when determining that the touch area S is less than the first area threshold T1, the CPU 11 advances to a step S5.

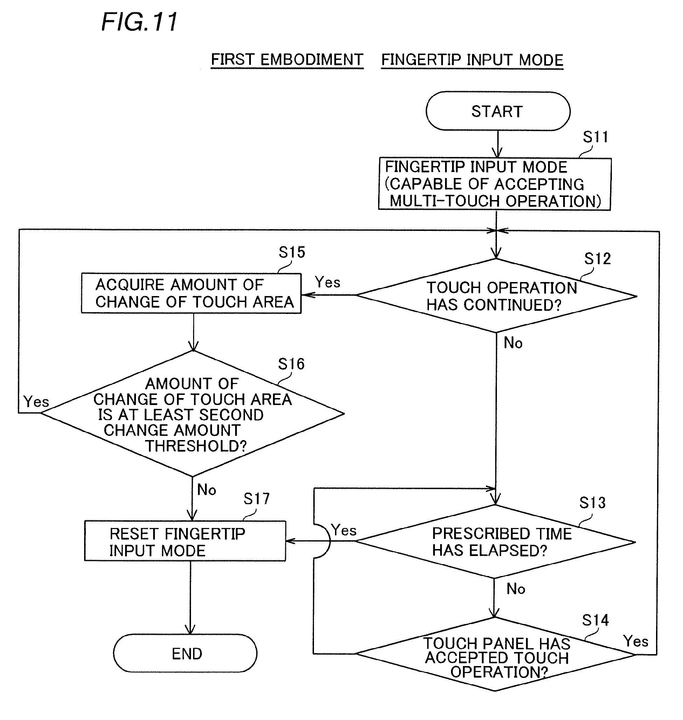

When determining that the touch area S is at least the first area threshold T1 at the step S3, the CPU 11 executes the fingertip input mode (see Fig. 11) described later at the step S4. Then, the CPU 11 returns to the step S1.

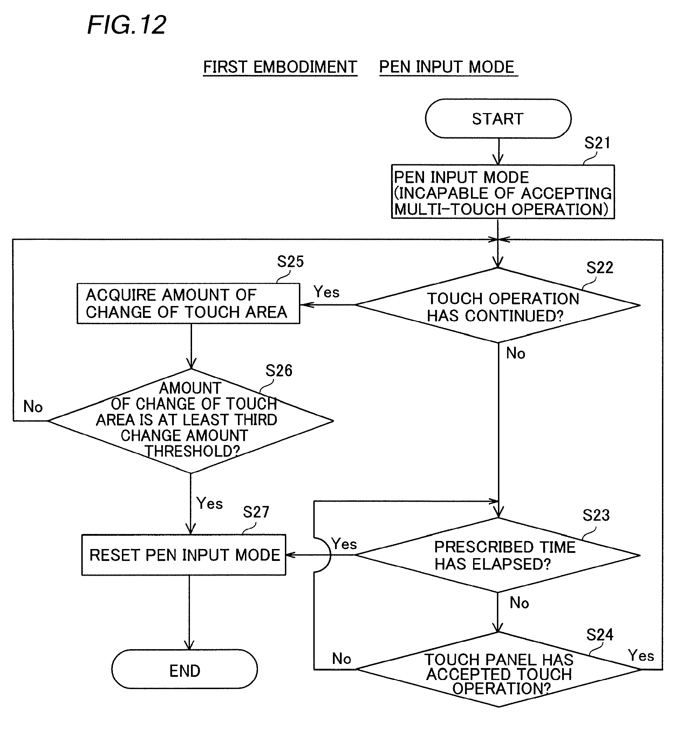

When determining that the touch area S is less than the first area threshold T1 at the step S3, the CPU 11 executes the pen input mode (see Fig. 12) described later at the step S5. Then, the CPU 11 returns to the step S1.

A fingertip input mode flow in the smartphone 100 according to the first embodiment is now described with reference to Fig. 11. The CPU 11 performs processing in the smartphone 100.

First, in the smartphone 100, the CPU 11 executes the fingertip input mode at a step S11, as shown in Fig. 11. In the fingertip input mode, the CPU 11 performs control of enabling acceptance of the touch operations simultaneously performed by a plurality of fingertips. In other words, the CPU 11 performs control of accepting the input operations based on the aforementioned multi-touch operation and gesture operation. Then, the CPU 11 advances to a step S12. At the step S12, the CPU 11 determines whether or not the touch operation has continued. When determining that the touch panel 2 has continued to accept the touch operation, the CPU 11 advances a step S15, and when determining that the touch panel 2 has not continued to accept the touch operation, the CPU 11 advances a step S13.

At the step S13, the CPU 11 determines whether or not the prescribed time has elapsed. When determining that the prescribed time has elapsed, the CPU 11 advances to a step S17, and when determining that the prescribed time has not elapsed, the CPU 11 advances to a step S14.

At the step S14, the CPU 11 determines whether or not the touch panel 2 has accepted the touch operation. When determining that the touch panel 2 has accepted the touch operation, the CPU 11 returns to the step S12, and when determining that the touch panel 2 has not accepted the touch operation, the CPU 11 returns to the step S13.

When determining that the touch operation has continued at the step S12, the CPU 11 acquires the amount of change of the touch area S at the step S15. Thereafter, the CPU 11 advances to a step S16. At the step S16, the CPU 11 determines whether or not the amount of change of the touch area S is at least the second change amount threshold T2. When determining that the amount of change of the touch area S is at least the second change amount threshold T2, the CPU 11 returns to the step S12, and when determining that the amount of change of the touch area S is not at least the second change amount threshold T2, the CPU 11 advances to the step S17.

When determining that the prescribed time has elapsed at the step S13 or determining that the amount of change of the touch area S is not at least the second change amount threshold T2 at the step S16, the CPU 11 resets the fingertip input mode at the step S17. In other words, the CPU 11 clears the determination result of whether or not to allow the plurality of touch operations performed simultaneously (determination of the input device) after the lapse of the prescribed time and terminates processing in the fingertip input mode. In other words, the CPU 11 terminates the processing at the step S4 in the aforementioned input device determination processing flow (see Fig. 10).

A pen input mode flow in the smartphone 100 according to the first embodiment is now described with reference to Fig. 12. The CPU 11 performs processing in the smartphone 100.

First, in the smartphone 100, the CPU 11 executes the pen input mode at a step S21, as shown in Fig. 12. In the pen input mode, the CPU 11 performs control of not accepting the touch operations simultaneously performed by the plurality of input devices. In other words, the CPU 11 performs control of not accepting the input operations based on the aforementioned multi-touch operation and gesture operation. Then, the CPU 11 advances to a step S22. At the step S22, the CPU 11 determines whether or not the touch operation has continued. When determining that the touch panel 2 has continued to accept the touch operation, the CPU 11 advances a step S25, and when determining that the touch panel 2 has not continued to accept the touch operation, the CPU 11 advances a step S23.

At the step S23, the CPU 11 determines whether or not the prescribed time has elapsed. When determining that the prescribed time has elapsed, the CPU 11 advances to a step S27, and when determining that the prescribed time has not elapsed, the CPU 11 advances to a step S24.

At the step S24, the CPU 11 determines whether or not the touch panel 2 has accepted the touch operation. When determining that the touch panel 2 has accepted the touch operation, the CPU 11 returns to the step S22, and when determining that the touch panel 2 has not accepted the touch operation, the CPU 11 returns to the step S23.

When determining that the touch operation has continued at the step S22, the CPU 11 acquires the amount of change of the touch area S at the step S25. Thereafter, the CPU 11 advances to a step S26. At the step S26, the CPU 11 determines whether or not the amount of change of the touch area S is at least the third change amount threshold T3. When determining that the amount of change of the touch area S is at least the third change amount threshold T3, the CPU 11 advances to a step S27, and when determining that the amount of change of the touch area S is not at least the third change amount threshold T3, the CPU 11 returns to the step S22.

When determining that the prescribed time has elapsed at the step S23 or determining that the amount of change of the touch area S is at least the third change amount threshold T3 at the step S26, the CPU 11 resets the pen input mode at the step S27. In other words, the CPU 11 clears the determination result of whether or not to allow the plurality of touch operations performed simultaneously (determination of the input device) after the lapse of the prescribed time and terminates processing in the pen input mode. In other words, the CPU 11 terminates the processing at the step S5 in the aforementioned input device determination processing flow (see Fig. 10).

According to the first embodiment, the following effects can be obtained.

According to the first embodiment, as hereinabove described, the SOC 1 is configured to acquire the touch area S from the input information of the touch panel 2 and determine whether or not to allow the plurality of touch operations performed simultaneously on the basis of the acquired touch area S. Thus, when determining to allow the plurality of touch operations performed simultaneously, the SOC 1 accepts an input based on the multi-touch operation, which is the touch operations simultaneously performed by the plurality of fingertips, and hence the SOC 1 can accept the gesture operation (a pinch-in operation, a pinch-out operation, or the like) of enlarging or reducing an entire display image by two fingers specific to the fingertip operation in addition to a pointing operation for selecting an object on a screen. When determining not to allow the plurality of touch operations performed simultaneously, the SOC 1 does not accept the touch operation even if the plurality of input devices (the user's hand holding the input device or the like) simultaneously touch the touch panel. Consequently, the SOC 1 can accept the input operation suitable for input means employed by the user.

According to the first embodiment, as hereinabove described, the SOC 1 is configured to validate the first touch operation of the plurality of successive touch operations and invalidate the second and subsequent touch operations in the state where the first touch operation is validated when determining not to allow the plurality of touch operations performed simultaneously (in the case of the pen input mode). Thus, the SOC 1 does not accept the touch operation even if an object (the user's hand holding the input device, for example) other than the input device touches the touch panel after the input device (pen) touches the touch panel, and hence the SOC 1 can be inhibited from erroneously accepting an input operation not intended by the user.

According to the first embodiment, as hereinabove described, the SOC 1 is configured to determine whether the touch operation has been performed by the fingertip operation or the input device operation (the input operation performed by the pen) other than the fingertip operation on the basis of the acquired touch area S. Thus, when determining that the touch operation has been performed by the fingertip operation, the SOC 1 can accept the multi-touch operation, the gesture operation, etc., which are the touch operations specific to the fingertip operation. When determining that the touch operation has been performed by the input device operation other than the fingertip operation, the SOC 1 does not accept the touch operation even if the plurality of input devices (the user's hand holding the input device or the like) simultaneously touch the touch panel. Consequently, the SOC 1 can accept the input operation more suitable for the input means employed by the user.

According to the first embodiment, as hereinabove described, the SOC 1 is configured to determine to allow the plurality of touch operations performed simultaneously when the touch area S is at least the first area threshold T1 and determine not to allow the plurality of touch operations performed simultaneously when the touch area S is less than the first area threshold T1. When the plurality of touch operations performed simultaneously are performed, i.e. in the case of the fingertip operation, for example, the touch area S is often relatively large (see Fig. 4). When the plurality of touch operations performed simultaneously are not performed, i.e. in the case of the input device operation (pen input), on the other hand, the touch area S is often relatively small (see Fig. 5). According to the first embodiment, the SOC 1 compares the touch area S with the first area threshold T1 while focusing on this point, so that the SOC 1 can easily determine whether or not to allow the plurality of touch operations performed simultaneously.

According to the first embodiment, as hereinabove described, the SOC 1 is configured to determine that the touch operation is the fingertip operation when the touch area S is at least the first area threshold T1 and determine that the touch operation is the input device operation when the touch area S is less than the first area threshold T1. Thus, the SOC 1 can easily determine whether the touch operation has been performed by the fingertip operation or the input device operation by comparing the touch area S with the first area threshold T1.

According to the first embodiment, as hereinabove described, the smartphone 100 is configured such that the input information of the touch panel 2 includes the two-dimensional input information (coordinate information) about the touch operation. Furthermore, the SOC 1 is configured to acquire the amount of change of the touch area S when the position of the touch operation has moved while the touch operation has continued and determine whether or not to allow the plurality of touch operations performed simultaneously on the basis of the touch area S again when the SOC 1 determines to allow the plurality of touch operations performed simultaneously and the amount of change of the touch area S is less than the second change amount threshold T2 or when the SOC 1 determines not to allow the plurality of touch operations performed simultaneously and the amount of change of the touch area S is at least the third change amount threshold T3. Thus, the SOC 1 determines whether or not to allow the plurality of touch operations performed simultaneously on the basis of the amount of change of the touch area S again even when the SOC 1 has determined whether or not to allow the plurality of touch operations performed simultaneously, and hence the SOC 1 can accept the input operation more reliably suitable for the input means employed by the user.

According to the first embodiment, as hereinabove described, the SOC 1 is configured to maintain the determination result of whether or not to allow the plurality of touch operations performed simultaneously until the prescribed time elapses after the touch operation. Thus, the SOC 1 can continuously perform control, employing the same determination result even when the user's fingertip or the input device is temporarily separated from the touch panel 2, and hence the SOC 1 can be further inhibited from accepting the input operation not intended by the user. After the user performs the touch operation with the input device, the SOC 1 does not determine that it is the input operation even when the input device is temporarily separated from the touch panel and the user's hand touches the touch panel (see Figs. 7 and 8) by the time when the user performs an input with the input device next, and hence the SOC 1 can continuously accept the touch operation performed by the input means intended by the user.

According to the first embodiment, as hereinabove described, the SOC 1 is configured to clear (reset) the determination result of whether or not to allow the plurality of touch operations performed simultaneously after the lapse of the prescribed time. Thus, the SOC 1 suppresses the input operation not intended by the user within the prescribed time and clears the determination result (resets the input mode) after the lapse of the prescribed time, whereby the SOC 1 can properly accept the input operation corresponding to the input means employed by the user even when the user changes the input means.

According to the first embodiment, as hereinabove described, the SOC 1 is configured to perform control of further increasing the time resolution of the detection of the touch operation than that in the case where the SOC 1 determines to allow the plurality of touch operations performed simultaneously (in the case of the fingertip input mode), in the case where the SOC 1 determines not to allow the plurality of touch operations performed simultaneously (in the case of the pen input mode). Thus, the SOC 1 can accurately accept the touch operation even when a quick touch operation has been performed by the input device (pen). Furthermore, when the touch operation has been performed by the fingertip operation, the time resolution is reduced, so that the processing load on the SOC 1 can be reduced.

According to the first embodiment, as hereinabove described, the SOC 1 is configured to be capable of running the drawing app and the video app and is configured to perform control of further increasing the time resolution of the detection of the touch operation than that in the case where the SOC 1 determines to allow the plurality of touch operations performed simultaneously or in the case where the video app is run, in the case where the SOC 1 determines not to allow the plurality of touch operations performed simultaneously and the drawing app is run. Generally, the speed of touch (the speed of writing) of the user employing the input device (pen) in the case where the drawing app is run is faster than the speed of touch of the user employing the fingertip or the input device in the case where the video app is run. On this point, according to the first embodiment, the time resolution is increased in the case where the SOC 1 determines not to allow the plurality of touch operations performed simultaneously and the drawing app is run, whereby the SOC 1 can accurately accept the touch operation even when the user quickly performs the touch operation with the input device (pen). In the case where the video app is run, the time resolution is reduced, and hence the processing load on the SOC 1 can be reduced.

According to the first embodiment, as hereinabove described, the SOC 1 is configured to acquire the radius information by circularly approximating the shape of the touched portion or acquire the long radius R1, the short radius R2, and the information about the orientation R3 of the long axis by elliptically approximating the shape of the touched portion, on the basis of the input information of the touch panel 2. Thus, the SOC 1 can easily acquire the information about the shape of the touched portion by acquiring the radius information or the long radius R1, the short radius R2, and the information about the orientation R3 of the long axis.

(Second Embodiment)

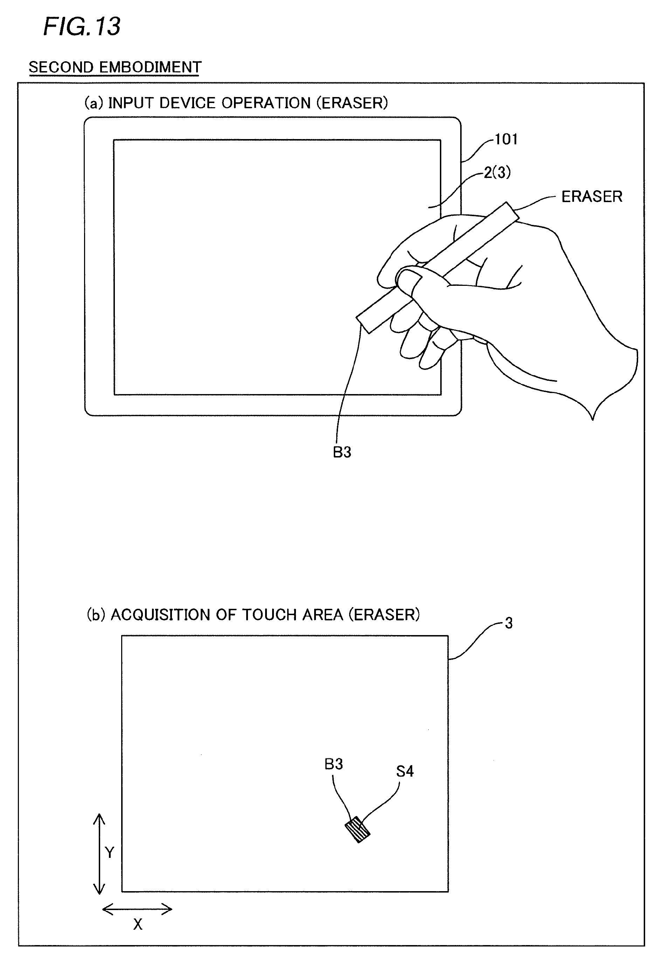

The structure of a smartphone 101 according to a second embodiment is now described with reference to Figs. 1 and 13. The smartphone 101 according to the second embodiment is configured to determine an input operation device (one of a fingertip, a pen, and an eraser) on the basis of a comparison between an acquired touch area and a second area threshold in addition to a comparison between the acquired touch area and a first area threshold, unlike the smartphone 100 according to the first embodiment configured to determine the input operation device (one of the fingertip and the pen) on the basis of the comparison between the acquired touch area and the first area threshold. The eraser is an example of the "atypical input device" in the present invention.

As shown in Fig. 1, the smartphone 101 according to the second embodiment includes an SOC 5, and the SOC 5 includes a CPU 51.

According to the second embodiment, the SOC 5 is configured to determine that a touch operation is based on an input operation performed by the eraser when a touch area S is less than a first area threshold T1 and at least a second area threshold T4 and determine that the touch operation is based on an input operation performed by the pen when the touch area S is less than the second area threshold T4, as shown in Fig. 13. Specifically, the CPU 51 is configured to acquire a touch area S4 when accepting the touch operation (a reference character B3 in Fig. 13) and determine that the touch operation has been performed by the eraser when the touch area S4 is less than the first area threshold T1 and at least the second area threshold T4, as shown in view (a) of Fig. 13.

The CPU 51 is configured to perform control of erasing a drawn image displayed on a display portion 3 corresponding to the position of a touch-operated portion when running a drawing app or the like and determines that the touch operation has been performed by the eraser. The remaining structure of the smartphone 101 according to the second embodiment is similar to that of the smartphone 100 according to the first embodiment.

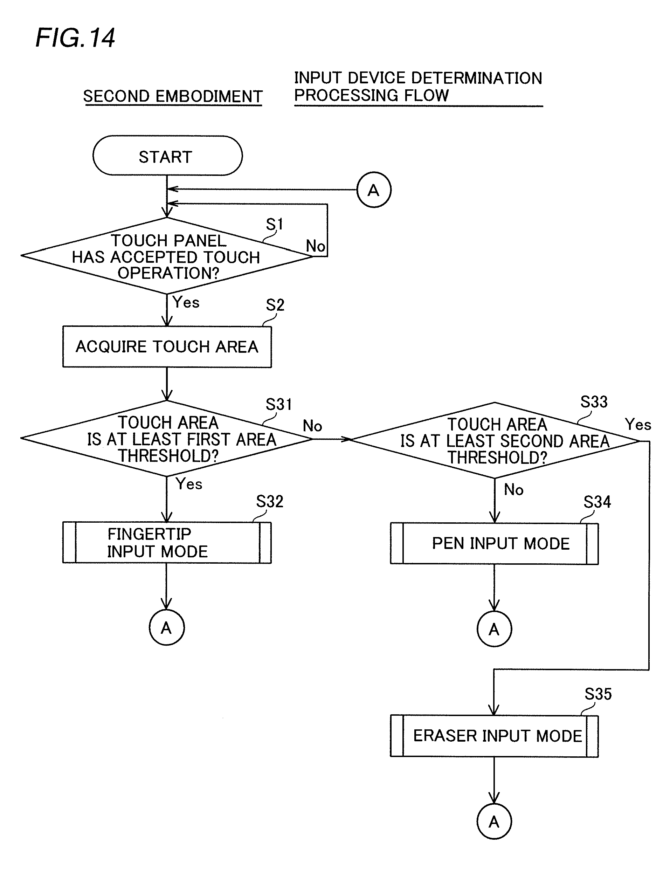

An input device determination processing flow in the smartphone 101 according to the second embodiment is now described with reference to Fig. 14. The CPU 51 performs processing in the smartphone 101.

First, in the smartphone 101, at steps S1 and S2, the CPU 51 performs processing similar to the processing at the steps S1 and S2 of the input device determination processing flow according to the first embodiment, as shown in Fig. 14. After the processing at the step S2, the CPU 51 advances to a step S31. At the step S31, the CPU 51 determines whether or not the touch area S is at least the first area threshold T1. When determining that the touch area S is at least the first area threshold T1, the CPU 51 advances to a step S32, and when determining that the touch area S is less than the first area threshold T1, the CPU 51 advances to a step S33.

At the step S32, the CPU 51 executes a fingertip input mode (see Fig. 11). Thereafter, the CPU 51 returns to the step S1. Processing in the fingertip input mode is similar to the processing in the fingertip input mode according to the first embodiment.

When determining that the touch area S is not at least the first area threshold T1 at the step S31, the CPU 51 determines whether or not the touch area S is at least the second area threshold T4 at the step S33. When determining that the touch area S is at least the second area threshold T4, the CPU 51 advances to a step S35, and when determining that the touch area S is less than the second area threshold T4, the CPU 51 advances to a step S34.

At the step S34, the CPU 51 executes a pen input mode (see Fig. 12). Thereafter the CPU 51 returns to the step S1. Processing in the pen input mode is similar to the processing in the pen input mode according to the first embodiment.

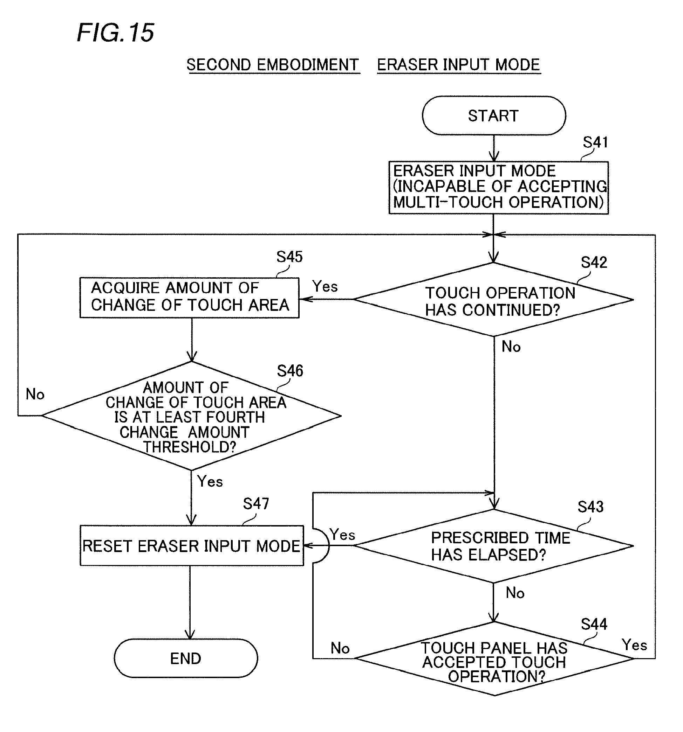

When determining that the touch area S is at least the second area threshold T4 at the step S33, the CPU 51 executes an eraser input mode (see Fig. 15) described later at the step S35. Thereafter, the CPU 51 returns to the step S1.

An eraser input mode flow in the smartphone 101 according to the second embodiment is now described with reference to Fig. 15. The CPU 51 performs processing in the smartphone 101.

First, in the smartphone 101, the CPU 51 executes the eraser input mode at a step S41, as shown in Fig. 15. In the eraser input mode, the CPU 51 performs control of not accepting touch operations simultaneously performed by a plurality of input devices. In other words, the CPU 51 performs control of not accepting input operations based on the aforementioned multi-touch operation and gesture operation. Then, the CPU 51 advances to a step S42. At the step S42, the CPU 51 determines whether or not the touch operation has continued. When determining that a touch panel 2 has continued to accept the touch operation, the CPU 51 advances a step S45, and when determining that the touch panel 2 has not continued to accept the touch operation, the CPU 51 advances a step S43.

At the step S43, the CPU 51 determines whether or not a prescribed time has elapsed. When determining that the prescribed time has elapsed, the CPU 51 advances to a step S47, and when determining that the prescribed time has not elapsed, the CPU 51 advances to a step S44.

At the step S44, the CPU 51 determines whether or not the touch panel 2 has accepted the touch operation. When determining that the touch panel 2 has accepted the touch operation, the CPU 51 returns to the step S42, and when determining that the touch panel 2 has not accepted the touch operation, the CPU 51 returns to the step S43.

When determining that the touch operation has continued at the step S42, the CPU 51 acquires the amount of change of the touch area S at the step S45. Thereafter, the CPU 51 advances to a step S46. At the step S46, the CPU 51 determines whether or not the amount of change of the touch area is at least a fourth change amount threshold. When determining that the amount of change of the touch area is at least the fourth change amount threshold, the CPU 51 advances to the step S47, and when determining that the amount of change of the touch area is not at least the fourth change amount threshold, the CPU 51 returns to the step S42.

When determining that the prescribed time has elapsed at the step S43 or determining that the amount of change of the touch area S is at least the fourth change amount threshold at the step S46, the CPU 51 resets the eraser input mode at the step S47. In other words, the CPU 51 terminates processing in the eraser input mode and terminates the processing at the step S35 in the aforementioned input device determination processing flow (see Fig. 14).

According to the second embodiment, the following effects can be obtained.

According to the second embodiment, as hereinabove described, the SOC 5 is configured to determine that the touch operation has been performed by the atypical input device (eraser) different from a typical input device (pen) when the touch area S is less than the first area threshold T1 and at least the second area threshold T4. Thus, the SOC 5 can easily determine whether the touch operation is based on the input operation performed by the typical input device (pen) or the input operation performed by the atypical input device (eraser) by comparing the touch area S with the first area threshold T1 and the second area threshold T4 when determining not to allow a plurality of touch operations performed simultaneously. The remaining effects of the smartphone 101 according to the second embodiment are similar to those of the smartphone 100 according to the first embodiment.

(Third Embodiment)

The structure of a smartphone 102 according to a third embodiment is now described with reference to Figs. 1, 16, and 17. The smartphone 102 according to the third embodiment is configured to determine an input operation device (one of a fingertip, a pen having a round pen tip (hereinafter referred to as the rounded pen), and a pen having a brush-like pen tip (hereinafter referred to as the brush pen)) on the basis of acquired information about the degree of circularity of a touch-operated portion in addition to a comparison between an acquired touch area and a first area threshold, unlike the smartphone 100 according to the first embodiment configured to determine the input operation device (one of the fingertip and the pen) on the basis of the comparison between the acquired touch area and the first area threshold.

As shown in Fig. 1, the smartphone 102 according to the third embodiment includes an SOC 6, and the SOC 6 includes a CPU 61 and a touch information generation portion 62.

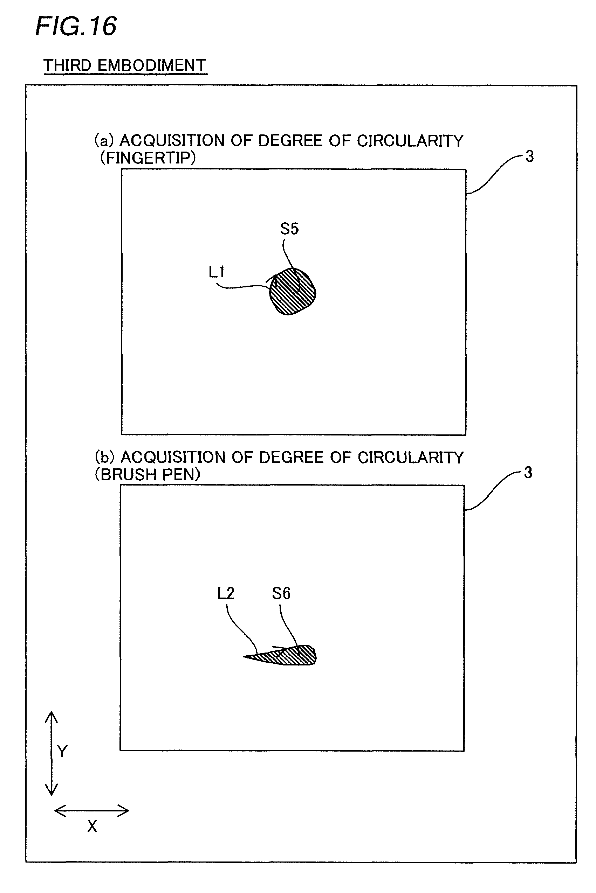

According to the third embodiment, the touch information generation portion 62 is configured to calculate the degree of circularity J of a touch-operated portion on the basis of a method for calculating a degree of circularity described later when a touch panel 2 accepts a touch operation, as shown in Fig. 16. The CPU 61 is configured to acquire the degree of circularity J of the touch-operated portion calculated by the touch information generation portion 62 in addition to a touch area S. The CPU 61 is configured to determine that the touch operation is based on a fingertip operation or a brush pen input operation when a touch area S5 is at least a first area threshold T1. The CPU 61 is configured to perform control of determining that the touch operation has been performed by the fingertip operation when the degree of circularity J of the touch-operated portion is at least a circularity degree threshold T5 and determining that the touch operation has been performed by an operation performed by the brush pen when the degree of circularity J of the touch-operated portion is less than the circularity degree threshold T5.

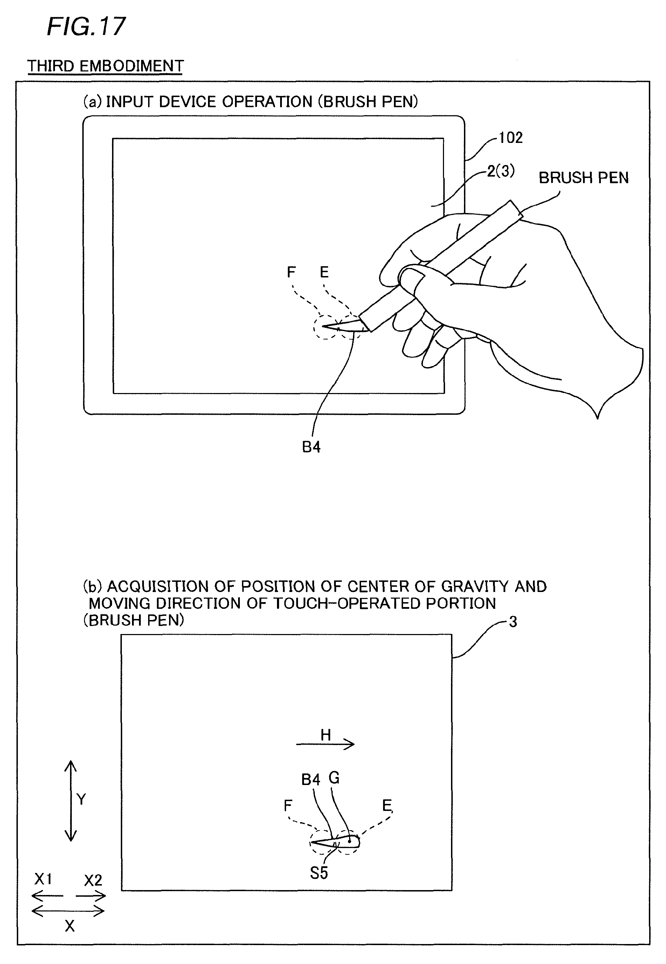

According to the third embodiment, the brush pen includes a brush body portion (a reference character E in Fig. 17) and a brush tip portion (a reference character F in Fig. 17), as shown in Fig. 17, and the CPU 61 is configured to determine the brush body portion and the brush tip portion on the basis of the position of the center of gravity of the touch-operated portion when determining that the touch operation has been performed by the brush pen. Specifically, the touch information generation portion 62 is configured to calculate the position (a reference character G in Fig. 17) of the center of gravity of the touch-operated portion on the basis of input information accepted by the touch panel 2, and the CPU 61 is configured to acquire the calculated position of the center of gravity of the touch-operated portion. The CPU 61 is configured to determine a section of the touch-operated portion (a reference character B4 in Fig. 17) (touched portion) close to the center of gravity as the brush body portion and determine a section of the touch-operated portion (the reference character B4 in Fig. 17) far from the center of gravity as the brush tip portion.

According to the third embodiment, the CPU 61 is configured to determine the brush body portion and the brush tip portion on the basis of information about the moving direction of the touch-operated portion when determining that the touch operation has been performed by the brush pen, as shown in Fig. 17. Specifically, the CPU 61 is configured to acquire the information about the moving direction of the touch-operated portion when the touch operation has been continuously performed. Furthermore, the CPU 61 is configured to determine that a touch operation in the moving direction (along arrow H in Fig. 17) of the accepted touch operation performed by the brush pen is a touch operation performed by the brush body portion and determine that a touch operation in a direction opposite to the moving direction (a direction opposite to arrow H in Fig. 17) of the accepted touch operation performed by the brush pen is a touch operation performed by the brush tip portion.

The CPU 61 is configured to output such a drawing that the color of a portion touch-operated by the brush body portion is deepened and the color of a portion touch-operated by the brush tip portion is lightened when running a drawing app or the like and determining that the touch operation has been performed by the brush pen. The remaining structure of the smartphone 102 according to the third embodiment is similar to that of the smartphone 100 according to the first embodiment.

A method for acquiring the information about the degree of circularity of the touch-operated portion is now described with reference to Fig. 16.

As shown in view (a) of Fig. 16, the touch information generation portion 62 calculates a touch area S5 (S6) and the perimeter L1 (L2) of the touch-operated portion on the basis of the input information detected by the touch panel 2 when the touch operation has been performed. Then, the touch information generation portion 62 calculates the degree of circularity J of the touch-operated portion on the basis of the following expression (1). The degree of circularity J is 1.0 in the case of a perfect circle, 0.79 in the case of a square, and 0.60 in the case of an equilateral triangle.

$$\text{degree of circularity } J = (4\pi \times \text{area } S)/(\text{perimeter } L)^2 \dots (1)$$

Then, the CPU 61 acquires the calculated degree of circularity J of the touch-operated portion and determines that the touch operation is based on the fingertip operation when the acquired degree of circularity J is at least the circularity degree threshold T5. On the other hand, when the touch operation in which the degree of circularity J in the case of the touch area S6 and the perimeter L2 of the touch-operated portion, less than the circularity degree threshold T5, is acquired is performed, as shown in view (b) of Fig. 16, the CPU 61 determines that the touch operation is the operation performed by the brush pen.

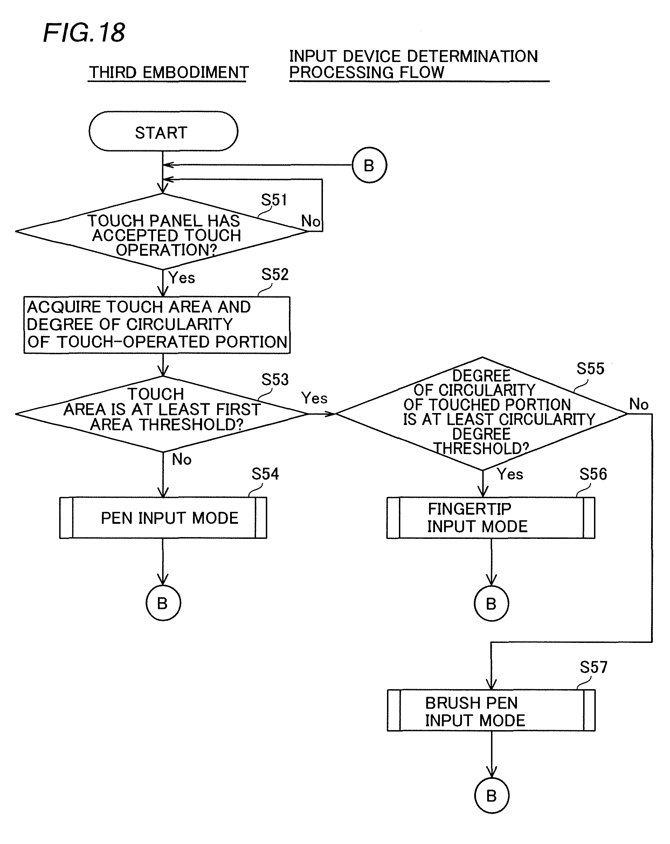

An input device determination processing flow in the smartphone 102 according to the third embodiment is now described with reference to Fig. 18. The CPU 61 performs processing in the smartphone 102.

First, in the smartphone 102, the CPU 61 determines whether or not the touch panel 2 has accepted the touch operation at a step S51, as shown in Fig. 18. The CPU 61 repeats this determination until the touch panel 2 has accepted the touch operation and advances to a step S52 when determining that the touch panel 2 has accepted the touch operation. At the step S52, the CPU 61 acquires the touch area S and the degree of circularity J of the touch-operated portion. Thereafter, the CPU 61 advances to a step S53. At the step S53, the CPU 61 determines whether or not the touch area S is at least the first area threshold T1. When determining that the touch area S is at least the first area threshold T1, the CPU 61 advances to a step S55, and when determining that the touch area S is less than the first area threshold T1, the CPU 61 advances to a step S54.

At the step S54, the CPU 61 executes a pen input mode (see Fig. 12). Thereafter, the CPU 61 returns to the step S51. Processing in the pen input mode is similar to the processing in the pen input mode according to the first embodiment.

When determining that the touch area S is at least the first area threshold T1 at the step S53, the CPU 61 determines whether or not the degree of circularity J of the touch-operated portion is at least the circularity degree threshold T5 at the step S55. When determining that the degree of circularity J of the touch-operated portion is at least the circularity degree threshold T5, the CPU 61 advances to a step S56, and when determining that the degree of circularity J of the touch-operated portion is not at least the circularity degree threshold T5, the CPU 61 advances to a step S57.

At the step S56, the CPU 61 executes a fingertip input mode (see Fig. 11). Thereafter, the CPU 61 returns to the step S51. Processing in the fingertip input mode is similar to the processing in the fingertip input mode according to the first embodiment.

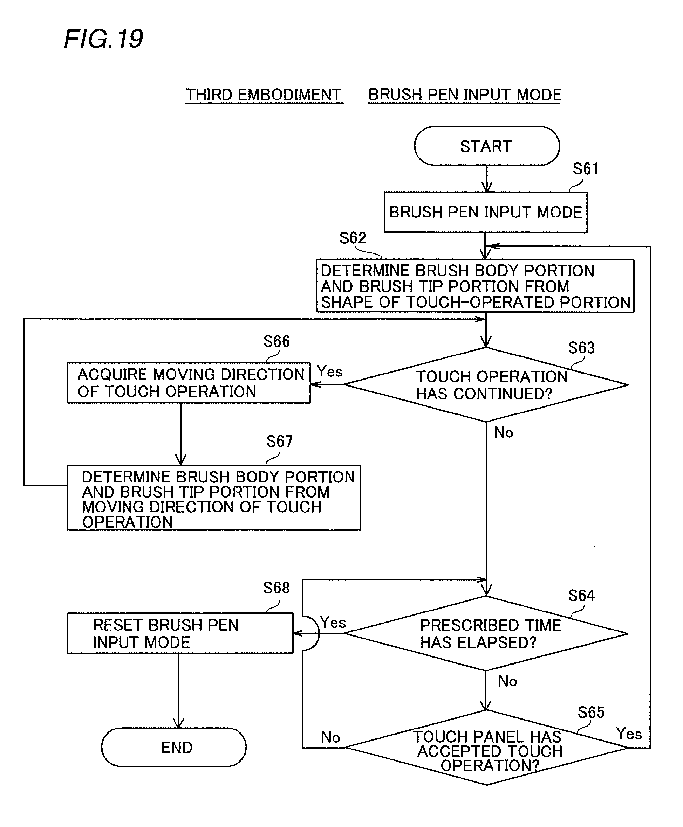

When determining that the degree of circularity J of the touch-operated portion is not at least the circularity degree threshold T5 at the step S55, the CPU 61 executes a brush pen input mode (see Fig. 19) described later at the step S57.
Thereafter, the CPU 61 returns to the step S51.

A brush pen input mode processing flow in the smartphone 102 according to the third embodiment is now described with reference to Fig. 19. The CPU 61 executes processing in the smartphone 102.

First, in the smartphone 102, the CPU 61 executes the brush pen input mode at a step S61, as shown in Fig. 19. In the brush pen input mode, the CPU 61 performs control of not accepting touch operations simultaneously performed by a plurality of input devices. In other words, the CPU 61 performs control of not accepting input operations based on the aforementioned multi-touch operation and gesture operation. Then, the CPU 61 advances to a step S62. At the step S62, the CPU 61 determines the brush body portion and the brush tip portion from the shape of the touch-operated portion. Thereafter, the CPU 61 advances a step S63.

At the step S63, the CPU 61 determines whether or not the touch operation has continued. When determining that the touch panel 2 has continued to accept the touch operation, the CPU 61 advances a step S66, and when determining that the touch panel 2 has not continued to accept the touch operation, the CPU 61 advances a step S64.

At the step S64, the CPU 61 determines whether or not a prescribed time has elapsed. When determining that the prescribed time has elapsed, the CPU 61 advances to a step S68, and when determining that the prescribed time has not elapsed, the CPU 61 advances to a step S65.

At the step S65, the CPU 61 determines whether or not the touch panel 2 has accepted the touch operation. When determining that the touch panel 2 has accepted the touch operation, the CPU 61 returns to the step S62, and when determining that the touch panel 2 has not accepted the touch operation, the CPU 61 returns to the step S64.

When determining that the touch operation has continued at the step S63, the CPU 61 acquires the moving direction of the touch-operated portion at the step S66. Thereafter, the CPU 61 advances to a step S67. At the step S67, the CPU 61 determines the brush body portion and the brush tip portion from the moving direction of the touch-operated portion. Thereafter, the CPU 61 returns to the step S63.

When determining that the prescribed time has elapsed at the step S63, the CPU 61 resets the brush pen input mode at the step S68. In other words, the CPU 61 terminates processing in the brush pen input mode and terminates the processing at the step S57 in the aforementioned input device determination processing flow (see Fig. 18).

According to the third embodiment, the following effects can be obtained.

According to the third embodiment, as hereinabove described, the SOC 6 is configured to calculate the degree of circularity J as the shape of a touched portion from the input information of the touch panel 2. Furthermore, the SOC 6 is configured to determine that the touch operation is the touch operation performed by the brush pen when the degree of circularity J is less than the circularity degree threshold T5. Thus, generally, the degree of circularity J of the brush pen is relatively small, and hence the SOC 6 can easily determine whether the touch operation is based on an input operation performed by the brush pen or is based on an input operation performed by another input means (fingertip operation) by comparing the degree of circularity J of the touch-operated portion with the circularity degree threshold T5.

According to the third embodiment, as hereinabove described, the SOC 6 is configured to determine the brush body portion and the brush tip portion on the basis of information about at least one of the center of gravity G of the touched portion and the moving direction H of the touch operation when determining that the touch operation is the touch operation performed by the brush pen. Thus, the SOC 6 can easily determine the brush body portion and the brush tip portion, and hence the SOC 6 can accurately accept the touch operation according to the shape of an input device (brush pen). The remaining effects of the smartphone 102 according to the third embodiment are similar to those of the smartphone 100 according to the first embodiment.

(Fourth Embodiment)

The structure of a smartphone 103 according to a fourth embodiment is now described with reference to Fig. 1. The smartphone 103 according to the fourth embodiment is configured to determine whether or not a touch operation has been performed by a brush pen on the basis of only an acquired degree of circularity J, unlike the smartphone 102 according to the third embodiment configured to determine whether or not the touch operation has been performed by the brush pen on the basis of both the acquired touch area S and degree of circularity J.

As shown in Fig. 1, the smartphone 103 according to the fourth embodiment includes an SOC 7, and the SOC 7 includes a CPU 71 and a touch information generation portion 62. The touch information generation portion 62 is configured similarly to the touch information generation portion 62 of the smartphone 102 according to the third embodiment and is configured to be capable of calculating the degree of circularity J of a touched portion. The SOC 7 is configured to determine that the touch operation is a touch operation performed by the brush pen when the degree of circularity J is less than a circularity degree threshold T5. The remaining structure of the smartphone 103 according to the fourth embodiment is similar to that of the smartphone 100 according to the first embodiment.

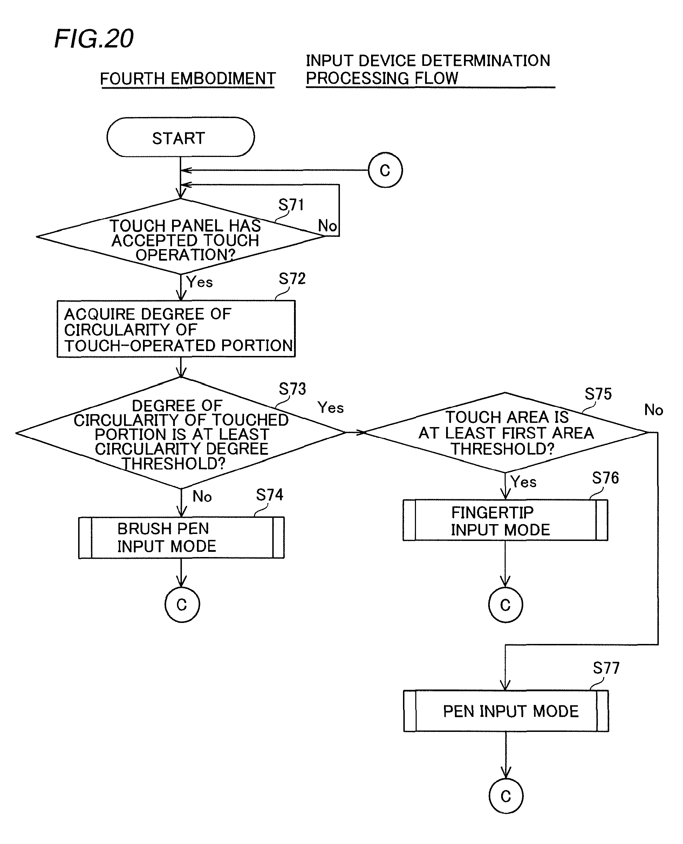

An input device determination processing flow in the smartphone 103 according to the fourth embodiment is now described with reference to Fig. 20. The CPU 71 performs processing in the smartphone 103.

First, in the smartphone 103, the CPU 71 determines whether or not a touch panel 2 has accepted the touch operation at a step S71, as shown in Fig. 20. The CPU 71 repeats this determination until the touch panel 2 has accepted the touch operation and advances to a step S72 when determining that the touch panel 2 has accepted the touch operation. At the step S72, the CPU 71 acquires the degree of circularity J of a touch-operated portion. Thereafter, the CPU 71 advances to a step S73.

At the step S73, the CPU 71 determines whether or not the degree of circularity J is at least the circularity degree threshold T5. When determining that the degree of circularity J is at least the circularity degree threshold T5, the CPU 71 advances to a step S75, and when determining that the degree of circularity J is less than the circularity degree threshold T5, the CPU 71 advances to a step S74.

At the step S74, the CPU 71 executes a brush pen input mode (see Fig. 19). Thereafter, the CPU 71 returns to the step S71. Processing in the brush pen input mode is similar to the processing in the brush pen input mode according to the third embodiment.

When determining that the degree of circularity J is at least the circularity degree threshold T5 at the step S73, the CPU 71 determines whether or not a touch area S is at least a first area threshold T1 at the step S75. When determining that the touch area S is at least the first area threshold T1, the CPU 71 advances to a step S76, and when determining that the touch area S is less than the first area threshold T1, the CPU 71 advances to a step S77.

At the step S76, the CPU 71 executes a fingertip input mode (see Fig. 11). Thereafter, the CPU 71 returns to the step S71. Processing in the fingertip input mode is similar to the processing in the fingertip input mode according to the first embodiment.

When determining that the touch area S is less than the first area threshold T1 at the step S75, the CPU 71 executes a pen input mode (see Fig. 12) at the step S77. Thereafter, the CPU 71 returns to the step S71. Processing in the pen input mode is similar to the processing in the pen input mode according to the first embodiment.

According to the fourth embodiment, the following effects can be obtained.

According to the fourth embodiment, as hereinabove described, the SOC 7 is configured to determine whether or not to allow a plurality of touch operations performed simultaneously (whether or not to turn on the brush pen input mode) on the basis of the acquired shape (the degree of circularity J, for example) of the touched portion. Thus, the smartphone 103 according to the fourth embodiment can accept an input operation suitable for input means employed by a user.

According to the fourth embodiment, as hereinabove described, the SOC 7 is configured to calculate the degree of circularity J as the shape of the touched portion from input information of the touch panel 2. The SOC 7 is configured to determine that the touch operation is the touch operation performed by the brush pen when the degree of circularity J is less than the circularity degree threshold T5. Thus, generally, the degree of circularity J of the brush pen is relatively small, and hence the SOC 7 can easily determine whether the touch operation is based on an input operation performed by the brush pen or is based on an input operation performed by another input means (a fingertip operation and an operation based on a pen input) by comparing the degree of circularity J of the touch-operated portion with the circularity degree threshold T5. The remaining effects of the smartphone 103 according to the fourth embodiment are similar to those of the smartphone 100 according to the first embodiment.

(Fifth Embodiment)

The structure of a smartphone 104 according to a fifth embodiment is now described with reference to Fig. 1. The smartphone 104 according to the fifth embodiment is configured to determine whether or not a touch operation is based on a pen input on the basis of the amount of change of an acquired touch area S, unlike the smartphone 100 according to the first embodiment configured to determine whether or not the touch operation is based on the pen input on the basis of the comparison between the acquired touch area S and the first area threshold T1.

As shown in Fig. 1, the smartphone 104 according to the fifth embodiment includes an SOC 8, and the SOC 8 includes a CPU 81 and a touch information generation portion 62. The SOC 8 is configured to acquire the amount of change of the touch area S from input information of a touch panel 2 and determine whether or not to allow a plurality of touch operations performed simultaneously on the basis of the acquired amount of change of the touch area S. The touch information generation portion 62 is configured similarly to the touch information generation portion 62 of the smartphone 102 according to the third embodiment and is configured to be capable of calculating the degree of circularity J of a touched portion. The remaining structure of the smartphone 104 according to the fifth embodiment is similar to that of the smartphone 100 according to the first embodiment.

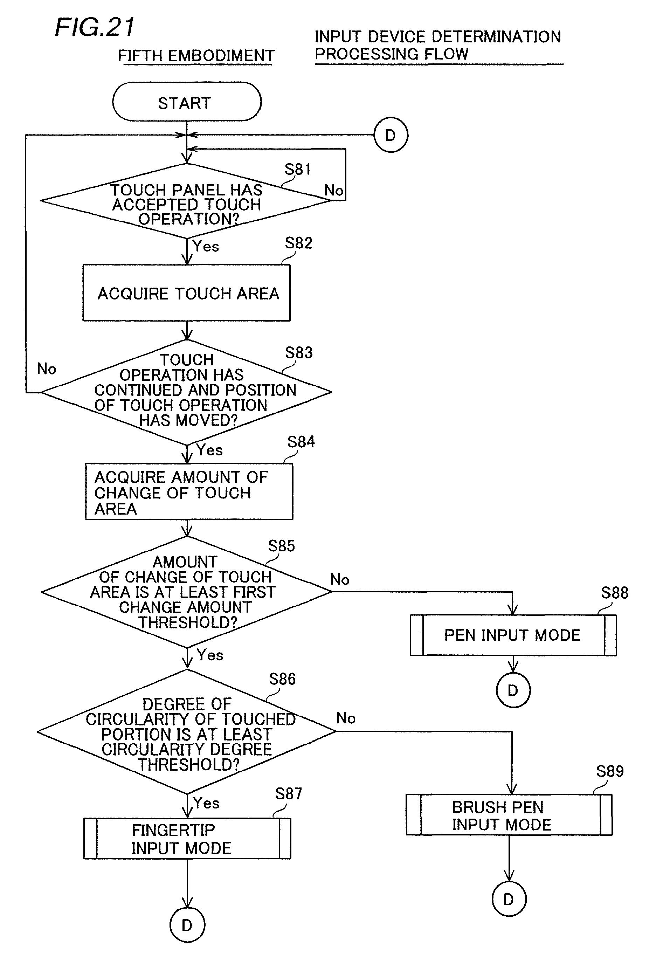

An input device determination processing flow in the smartphone 104 according to the fifth embodiment is now described with reference to Fig. 21. The CPU 81 performs processing in the smartphone 104.

First, in the smartphone 104, the CPU 81 determines whether or not the touch panel 2 has accepted the touch operation at a step S81, as shown in Fig. 21. The CPU 81 repeats this determination until the touch panel 2 has accepted the touch operation and advances to a step S82 when determining that the touch panel 2 has accepted the touch operation. At the step S82, the CPU 81 acquires the touch area S. Thereafter, the CPU 81 advances to a step S83.

At the step S83, the CPU 81 determines whether or not the touch operation has continued and the position of the touch operation has moved. When determining that the touch operation has continued and the position of the touch operation has moved, the CPU 81 advances to a step S84, and when determining that the touch operation has not continued or the position of the touch operation has not moved, the CPU 81 returns to the step S81.

At the step S84, the CPU 81 acquires the amount of change of the touch area S (see Figs. 4 and 5). Thereafter, the CPU 81 advances to a step S85.

At the step S85, the CPU 81 determines whether or not the amount of change of the touch area S is at least a first change amount threshold T6. When determining that the amount of change of the touch area S is at least the first change amount threshold T6, the CPU 81 advances to a step S86, and when determining that the amount of change of the touch area S is less than the first change amount threshold T6, the CPU 81 advances to a step S88.

At the step S86, the CPU 81 determines whether or not the degree of circularity J of the touched portion is at least a circularity degree threshold T5. When determining that the degree of circularity J of the touched portion is at least the circularity degree threshold T5, the CPU 81 advances to a step S87, and when determining that the degree of circularity J of the touched portion is less than the circularity degree threshold T5, the CPU 81 advances to a step S89.

At the step S87, the CPU 81 executes a fingertip input mode (see Fig. 11). Thereafter, the CPU 81 returns to the step S81. Processing in the fingertip input mode is similar to the processing in the fingertip input mode according to the first embodiment.

When determining that the amount of change of the touch area S is less than the first change amount threshold T6 at the step S85, the CPU 81 executes a pen input mode (see Fig. 12) at the step S88. Thereafter, the CPU 81 returns to the step S81. Processing in the pen input mode is similar to the processing in the pen input mode according to the first embodiment.

When determining that the degree of circularity J of the touched portion is less than the circularity degree threshold T5 at the step S86, the CPU 81 executes a brush pen input mode (see Fig. 19) at the step S89. Thereafter, the CPU 81 returns to the step S81. Processing in the brush pen input mode is similar to the processing in the brush pen input mode according to the third embodiment.

According to the fifth embodiment, the following effects can be obtained.

According to the fifth embodiment, as hereinabove described, the SOC 8 is configured to acquire the amount of change of the touch area S and determine whether or not to allow the plurality of touch operations performed simultaneously (whether or not to turn on the pen input mode) on the basis of the acquired amount of change of the touch area S. Thus, the smartphone 104 according to the fifth embodiment can accept an input operation suitable for input means employed by a user.

According to the fifth embodiment, as hereinabove described, the SOC 8 is configured to acquire the amount of change of the touch area S when the position of the touch operation has moved while the touch operation has continued and determine not to allow the plurality of touch operations performed simultaneously when the acquired amount of change is less than the first change amount threshold T6. When the plurality of touch operations are performed simultaneously (a fingertip operation, for example), the amount of change of the touch area S is relatively large. When the plurality of touch operations are not performed simultaneously (an input device operation, for example), on the other hand, the amount of change of the touch area S is relatively small. On this point, according to the fifth embodiment, the SOC 8 can easily determine whether or not to allow the plurality of touch operations performed simultaneously by comparing the touch area S with the first change amount threshold T6. The remaining effects of the smartphone 104 according to the fifth embodiment are similar to those of the smartphone 100 according to the first embodiment.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while the present invention is applied to the smartphone as an example of the input apparatus in each of the aforementioned first to fifth embodiments, the present invention is not restricted to this. The present invention is also applicable to an input apparatus other than the smartphone. The present invention is also applicable to a tablet, a touch panel operation device for a personal computer, etc., for example.

While the projection capacitance touch panel is shown as an example of the touch panel in each of the aforementioned first to fifth embodiments, the present invention is not restricted to this. According to the present invention, a touch panel including a two-dimensional touch sensor array, other than the projection capacitance touch panel may alternatively be employed.

While the present invention is applied to the pen, the eraser, or the brush pen as an example of the input device in each of the aforementioned first to fifth embodiments, the present invention is not restricted to this. The present invention is also applicable to an input device other than the pen, the eraser, and the brush pen. The present invention is also applicable to a stamp or the like, for example.

While the fingertip operation and the operation performed by the input device are determined on the basis of the first area threshold and the second area threshold in each of the aforementioned first to fifth embodiments, the present invention is not restricted to this. For example, in addition to the first and second area thresholds, a third area threshold may alternatively be employed not to accept an area (see a reference character S3 in Fig. 8) significantly larger than the area of the fingertip.

While the video app is employed as an example of the non-drawing application software in each of the aforementioned first to fifth embodiments, the present invention is not restricted to this. The present invention is also applicable to non-drawing application software other than the video app.

While the same prescribed time is employed as an example of the prescribed time for the fingertip operation and the input device operation in each of the aforementioned first to fifth embodiments, the present invention is not restricted to this. According to the present invention, the prescribed time for the fingertip and the prescribed time for the input device may alternatively be set to different values.

While the information about the position of the center of gravity of the touch-operated portion is employed to determine the brush body portion and the brush tip portion of the pen having the brush-like pen tip in the aforementioned third embodiment, the present invention is not restricted to this. The information about the position of the center of gravity of the touch-operated portion may alternatively be employed to determine the fingertip operation and the operation performed by the pen having the brush-like pen tip. In this case, the touch operation is determined to be the fingertip operation when a distance between a central portion and the center of gravity of the touch-operated portion is less than a prescribed threshold, and the touch operation is determined to be the operation performed by the pen having the brush-like pen tip when the distance between the central portion and the center of gravity of the touch-operated portion is at least the prescribed threshold.

While the aforementioned first to fifth embodiments are configured individually, the present invention is not restricted to this. According to the present invention, the first to fifth embodiments may alternatively be combined. For example, the rounded pen, the eraser, and the fingertip may be determinable by comparing the touch area with the two area thresholds in the second embodiment, and the rounded pen, the eraser, the fingertip, and the brush pen may be determinable by determining the fingertip and the brush pen on the basis of the degree of circularity of the touch-operated portion in the third embodiment.

While the processing operations performed by the control portion according to the present invention are described, using the flowcharts described in a flow-driven manner in which processing is performed in order along a processing flow for the convenience of illustration in each of the aforementioned first to fifth embodiments, the present invention is not restricted to this. According to the present invention, the processing operations performed by the control portion may be performed in an event-driven manner in which processing is performed on an event basis. In this case, the processing operations performed by the control portion may be performed in a complete event-driven manner or in a combination of an event-driven manner and a flow-driven manner.

**Claims**

1. An input apparatus (100, 101, 102, 103, 104) comprising:

   a touch panel (2); and
   a control portion (1, 5, 6, 7, 8) acquiring input information input by a user with the touch panel,
   the control portion configured to acquire at least one of a touch area and a shape of a touched portion from the input information and determine whether or not to allow a plurality of touch operations performed simultaneously on the basis of at least one of the touch area which has been acquired, an amount of change of the touch area, and the shape of the touched portion which has been acquired.

2. The input apparatus according to claim 1, wherein the control portion is configured to validate a first touch operation of a plurality of successive touch operations when determining not to allow the plurality of touch operations performed simultaneously and invalidate second and subsequent touch operations in a state where the first touch operation is validated.

3. The input apparatus according to claim 1 or 2, wherein
   the control portion is configured to determine whether a touch operation has been performed by a fingertip operation or an input device operation other than the fingertip operation on the basis of at least one of the touch area which has been acquired, the amount of change of the touch area, and the shape of the touched portion.

4. The input apparatus according to any of claims 1 to 3, wherein
the control portion is configured to determine to allow the plurality of touch operations performed simultaneously when the touch area is at least a first area threshold and determine not to allow the plurality of touch operations performed simultaneously when the touch area is less than the first area threshold.

5. The input apparatus according to claim 4, wherein the control portion is configured to determine that a touch operation is a fingertip operation when the touch area is at least the first area threshold and determine that the touch operation is an input device operation when the touch area is less than the first area threshold.

6. The input apparatus according to any of claims 1 to 5, wherein
the input information includes positional information about a touch operation, and
the control portion is configured to acquire the amount of change of the touch area when a position of the touch operation has moved while the touch operation has continued and determine not to allow the plurality of touch operations performed simultaneously when the amount of change which has been acquired is less than a first change amount threshold.

7. The input apparatus according to any of claims 1 to 6, wherein
the input information includes positional information about a touch operation, and
the control portion is configured to acquire the amount of change of the touch area when a position of the touch operation has moved while the touch operation has continued and determine whether or not to allow the plurality of touch operations performed simultaneously on the basis of the touch area again when the control portion determines to allow the plurality of touch operations performed simultaneously and the amount of change is less than a second change amount threshold or when the control portion determines not to allow the plurality of touch operations performed simultaneously and the amount of change is at least a third change amount threshold.

8. The input apparatus according to any of claims 1 to 7, wherein
the control portion is configured to maintain a determination result of whether or not to allow the plurality of touch operations performed simultaneously until a prescribed time elapses after a touch operation.

9. The input apparatus according to claim 8, wherein
the control portion is configured to clear the determination result of whether or not to allow the plurality of touch operations performed simultaneously after the prescribed time elapses.

10. The input apparatus according to any of claims 1 to 9, wherein
the control portion is configured to determine that a touch operation is an operation performed by an atypical input device different from a typical input device when the touch area is less than a first area threshold and at least a second area threshold.

11. The input apparatus according to any of claims 1 to 10, wherein
the control portion is configured to calculate a degree of circularity as the shape of the touched portion from the input information and determine that a touch operation is a touch operation performed by a brush pen when the degree of circularity is less than a circularity degree threshold.

12. The input apparatus according to claim 11, wherein
the brush pen includes a pen tip having a brush body portion and a brush tip portion, and
the control portion is configured to determine the brush body portion and the brush tip portion on the basis of information about at least one of a center of gravity of the touched portion and a moving direction of the touch operation when determining that the touch operation is the touch operation performed by the brush pen.

13. The input apparatus according to any of claims 1 to 12, wherein
the control portion is configured to perform control of further increasing a time resolution of detection of a touch operation than that in a case where the control portion determines to allow the plurality of touch operations performed simultaneously, in a case where the control portion determines not to allow the plurality of touch operations performed simultaneously.

14. The input apparatus according to claim 13, wherein

the control portion is configured to be capable of running drawing application software and non-drawing application software and perform control of further increasing the time resolution of the detection of the touch operation than that in the case where the control portion determines to allow the plurality of touch operations performed simultaneously or in a case where the non-drawing application software is run, in a case where the control portion determines not to allow the plurality of touch operations performed simultaneously and the drawing application software is run.

15. The input apparatus according to any of claims 1 to 14, wherein
the control portion is configured to acquire radius information by circularly approximating the shape of the touched portion or acquire a long radius, a short radius, and information about an orientation of a long axis by elliptically approximating the shape of the touched portion, on the basis of the input information.

## FIG.1

SMARTPHONE — 100(101, 102, 103, 104)

- COMMUNICATION PORTION — 4

SOC — 1(5, 6, 7, 8)
- CPU — 11(51, 61, 71, 81)
- FLASH MEMORY — 12
- TOUCH INFORMATION GENERATION PORTION — 13(62)
- COMMU-NICATION I/F — 14
- INTERNAL BUS — 17
- TOUCH PANEL I/F — 15
- DISPLAY CONTROL CIRCUIT — 16

TOUCH PANEL — 2
- 3
- DISPLAY PORTION

EP 2 891 961 A2

## FIG.2

FIRST EMBODIMENT

(a) TOUCH SENSOR ARRAY

(b) FINGERTIP OPERATION (ONE FINGER)

FINGERTIP

(c) ACQUISITION OF TOUCH AREA (FINGERTIP)

(d) ELLIPTICAL APPROXIMATION

## FIG.3

FIRST EMBODIMENT

(a) INPUT DEVICE OPERATION (PEN)

100

2(3)

PEN
(PEN HAVING
ROUND PEN
TIP)

B

(b) ACQUISITION OF TOUCH AREA (PEN)

3

B

S2

Y

X

## FIG.4

FIRST EMBODIMENT

(a) FINGERTIP OPERATION (MOVE)

C

100

2(3)

(b) ACQUISITION OF TOUCH AREA
(AMOUNT OF CHANGE OF AREA)

3

S1a
S1b
S1c
S1d

C

Y

X

## FIG.5

FIRST EMBODIMENT

(a) INPUT DEVICE OPERATION (PEN)

100

2(3)

D

(b) ACQUISITION OF TOUCH AREA (PEN)

3

S2a
S2b
S2c
S2d

D

Y

X

## FIG.6

FIRST EMBODIMENT

(a) FINGERTIP OPERATION (TWO FINGERS)

A1

A2

100

2(3)

(b) ACQUISITION OF TOUCH AREA (TWO FINGERS)

3

A1

A2

Y

X

## FIG.7

FIRST EMBODIMENT

(a) INPUT DEVICE OPERATION (PEN)

(b) ACQUISITION OF TOUCH AREA (PEN)

## FIG.8

FIRST EMBODIMENT

# FIG.9

FIRST EMBODIMENT

(a) DRAWING APP (PEN INPUT)      3

Y

X

(b) DRAWING APP (FINGERTIP INPUT)      3

Y

X

(c) VIDEO APP (PEN INPUT)      3

Y

X

(d) VIDEO APP (FINGERTIP INPUT)      3

Y

X

## FIG.10

FIRST EMBODIMENT    INPUT DEVICE DETERMINATION PROCESSING FLOW

```
                    ┌─────────────┐
                    │    START    │
                    └─────────────┘
                          │
          ┌──────────────►│◄──────────────┐
          │               ▼               │
          │         S1                    │
          │    ╱TOUCH PANEL╲    No         │
          │   ╱ HAS ACCEPTED ╲─────────────┤
          │   ╲   TOUCH      ╱             │
          │    ╲ OPERATION? ╱              │
          │         │Yes                   │
          │         │    S2                │
          │         ▼                      │
          │   ┌─────────────────┐          │
          │   │ ACQUIRE TOUCH   │          │
          │   │     AREA        │          │
          │   └─────────────────┘          │
          │         │                      │
          │         ▼    S3                 │
          │    ╱TOUCH AREA╲     No          │
          │   ╱IS AT LEAST  ╲───────────┐   │
          │   ╲FIRST AREA   ╱           │   │
          │    ╲THRESHOLD? ╱            │   │
          │         │Yes                │   │
          │         │    S4             │   S5
          │         ▼                   ▼
          │   ┌─────────────┐     ┌──────────────┐
          └───┤  FINGERTIP  │     │ PEN INPUT    │
              │ INPUT MODE  │     │    MODE      │
              └─────────────┘     └──────────────┘
```

## FIG.11

FIRST EMBODIMENT    FINGERTIP INPUT MODE

START

S11
FINGERTIP INPUT MODE
(CAPABLE OF ACCEPTING
MULTI-TOUCH OPERATION)

S15
ACQUIRE AMOUNT OF
CHANGE OF TOUCH AREA
← Yes — S12
TOUCH OPERATION
HAS CONTINUED?
No

S16
AMOUNT OF
CHANGE OF TOUCH AREA
IS AT LEAST SECOND
CHANGE AMOUNT
THRESHOLD?
Yes
No

S17
RESET FINGERTIP
INPUT MODE
← Yes — S13
PRESCRIBED TIME
HAS ELAPSED?
No

END

S14
TOUCH PANEL HAS
ACCEPTED TOUCH
OPERATION?
Yes

## FIG.12

FIRST EMBODIMENT    PEN INPUT MODE

```
                              ( START )
                                  │
                                  ▼              S21
                    ┌──────────────────────────────┐
                    │ PEN INPUT MODE                │
                    │ (INCAPABLE OF ACCEPTING       │
                    │ MULTI-TOUCH OPERATION)        │
                    └──────────────────────────────┘
                                  │
          S25                     ▼              S22
┌─────────────────────┐  Yes  ╱────────────────╲
│ ACQUIRE AMOUNT OF   │◄──────  TOUCH OPERATION  ╲
│ CHANGE OF TOUCH AREA│        ╲ HAS CONTINUED?  ╱
└─────────────────────┘         ╲───────────────╱
          │                           │ No
          ▼         S26               │
      ╱─────────────╲                 │
     ╱   AMOUNT      ╲                │
    ╱ OF CHANGE OF    ╲               │
   ╱ TOUCH AREA IS AT  ╲              │
No ╲ LEAST THIRD       ╱              │
   ╲ CHANGE AMOUNT    ╱               │
    ╲ THRESHOLD?     ╱                │
      ╲─────────────╱                 ▼              S23
          │ Yes    S27       ╱──────────────────╲
          ▼                Yes  PRESCRIBED TIME  ╲
┌─────────────────────┐◄────  ╲ HAS ELAPSED?    ╱
│ RESET PEN INPUT MODE│        ╲───────────────╱
└─────────────────────┘             │ No
          │                         ▼              S24
          ▼               ╱──────────────────────╲  Yes
      ( END )        No  ╱  TOUCH PANEL HAS        ╲
                        ╲  ACCEPTED TOUCH          ╱
                        ╲  OPERATION?             ╱
                          ╲──────────────────────╱
```

# FIG.13

SECOND EMBODIMENT

(a) INPUT DEVICE OPERATION (ERASER)

101

2(3)

ERASER

B3

(b) ACQUISITION OF TOUCH AREA (ERASER)

3

B3    S4

Y

X

## FIG.14

SECOND EMBODIMENT

INPUT DEVICE DETERMINATION
PROCESSING FLOW

START

(A)

S1

TOUCH PANEL
HAS ACCEPTED TOUCH
OPERATION?   No

Yes

S2

ACQUIRE TOUCH AREA

S31

TOUCH AREA
IS AT LEAST FIRST AREA
THRESHOLD?   No

Yes

S33

TOUCH AREA
IS AT LEAST SECOND AREA
THRESHOLD?   Yes

No

S32

FINGERTIP
INPUT MODE

S34

PEN INPUT MODE

(A)

(A)

S35

ERASER INPUT MODE

(A)

## FIG.15

SECOND EMBODIMENT    ERASER INPUT MODE

```
                              ┌──────────────┐
                              │    START     │
                              └──────┬───────┘
                                     │              S41
                      ┌──────────────▼──────────────┐
                      │ ERASER INPUT MODE           │
                      │ (INCAPABLE OF ACCEPTING     │
                      │ MULTI-TOUCH OPERATION)      │
                      └─────────────┬───────────────┘
                                    │
         S45                        │                    S42
  ┌──────────────────┐   Yes       ▼
  │ ACQUIRE AMOUNT OF │◄──────  TOUCH OPERATION
  │ CHANGE OF TOUCH   │         HAS CONTINUED?
  │ AREA             │
  └────────┬─────────┘               │ No
           │          S46            │
           ▼                         │
      AMOUNT OF                      │
   CHANGE OF TOUCH AREA              │
   IS AT LEAST FOURTH                │
   CHANGE  AMOUNT                    ▼                  S43
   THRESHOLD?                  PRESCRIBED TIME
           │  Yes    Yes       HAS ELAPSED?
    S47    │      ◄──────
  ┌────────▼────────┐                 │ No
  │ RESET ERASER    │                 ▼               S44
  │ INPUT MODE      │            TOUCH PANEL HAS   Yes
  └────────┬────────┘    No      ACCEPTED TOUCH
           │                     OPERATION?
           ▼
     ┌──────────┐
     │   END    │
     └──────────┘
```

## FIG.16

THIRD EMBODIMENT

(a) ACQUISITION OF DEGREE OF CIRCULARITY
   (FINGERTIP)

3

S5

L1

(b) ACQUISITION OF DEGREE OF CIRCULARITY
   (BRUSH PEN)

3

L2   S6

Y

X

## FIG.17

THIRD EMBODIMENT

(a) INPUT DEVICE OPERATION (BRUSH PEN)

102

2(3)

BRUSH PEN

F E

B4

(b) ACQUISITION OF POSITION OF CENTER OF GRAVITY AND MOVING DIRECTION OF TOUCH-OPERATED PORTION (BRUSH PEN)

3

H

B4 G

F E

S5

Y

X1 X2

X

*FIG.18*

THIRD EMBODIMENT

INPUT DEVICE DETERMINATION
PROCESSING FLOW

START

B

S51

TOUCH PANEL HAS
ACCEPTED TOUCH
OPERATION?

No

Yes

S52

ACQUIRE TOUCH AREA AND
DEGREE OF CIRCULARITY
OF TOUCH-OPERATED PORTION

S53

TOUCH
AREA IS AT LEAST FIRST
AREA THRESHOLD?

Yes

No

S55

DEGREE
OF CIRCULARITY
OF TOUCHED PORTION
IS AT LEAST CIRCULARITY
DEGREE
THRESHOLD?

No

Yes

S54

PEN INPUT MODE

S56

FINGERTIP
INPUT MODE

B

B

S57

BRUSH PEN
INPUT MODE

B

## FIG.19

THIRD EMBODIMENT    BRUSH PEN INPUT MODE

START

S61
BRUSH PEN INPUT MODE

S62
DETERMINE BRUSH BODY PORTION AND BRUSH TIP PORTION FROM SHAPE OF TOUCH-OPERATED PORTION

S63
TOUCH OPERATION HAS CONTINUED?

S66 — Yes
ACQUIRE MOVING DIRECTION OF TOUCH OPERATION

S67
DETERMINE BRUSH BODY PORTION AND BRUSH TIP PORTION FROM MOVING DIRECTION OF TOUCH OPERATION

No

S64
PRESCRIBED TIME HAS ELAPSED?

S68 — Yes
RESET BRUSH PEN INPUT MODE

No

S65
TOUCH PANEL HAS ACCEPTED TOUCH OPERATION?

No    Yes

END

## FIG.20

FOURTH EMBODIMENT

INPUT DEVICE DETERMINATION
PROCESSING FLOW

## FIG.21

FIFTH EMBODIMENT

INPUT DEVICE DETERMINATION
PROCESSING FLOW

```
                    ( START )
                        |
        +---------------+<--------------(D)
        |               |<---+
        |              \|/    |
        |          < TOUCH PANEL HAS    >  S81
        |          < ACCEPTED TOUCH     >---No
        |          < OPERATION?         >
        |               |
        |              Yes
        |               |                S82
        |     +-------------------+
        |     | ACQUIRE TOUCH AREA|
        |     +-------------------+
        |               |
        |              \|/               S83
        |          <   TOUCH             >
        |          < OPERATION HAS       >
       No ---------< CONTINUED AND POSITION >
                   < OF TOUCH OPERATION  >
                   <   HAS MOVED?        >
                        |
                       Yes               S84
              +-------------------+
              | ACQUIRE AMOUNT OF |
              | CHANGE OF TOUCH   |
              | AREA              |
              +-------------------+
                        |
                       \|/               S85
                   <   AMOUNT           >
                   < OF CHANGE OF TOUCH >
                   < AREA IS AT LEAST FIRST >---No----+
                   < CHANGE AMOUNT      >            |
                   <   THRESHOLD?       >            |
                        |                            |  S88
                       Yes                  +------------------+
                        |                   | PEN INPUT MODE   |
                        |                   +------------------+
                        |                            |
                        |                           (D)
                       \|/               S86
                   < DEGREE OF          >
                   < CIRCULARITY OF TOUCHED >---No----+
                   < PORTION IS AT LEAST >           |
                   < CIRCULARITY DEGREE >            |
                   <   THRESHOLD?       >            |  S89
                        |                   +------------------+
                       Yes          S87     | BRUSH PEN        |
              +-------------------+          | INPUT MODE       |
              | FINGERTIP         |          +------------------+
              | INPUT MODE        |                   |
              +-------------------+                  (D)
                        |
                       (D)
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11272422 A